(19) Europäisches Patentamt

European Patent Office

Office européen des brevets

(11) **EP 0 989 502 B1**

(12) **FASCICULE DE BREVET EUROPEEN**

(45) Date de publication et mention
de la délivrance du brevet:
**22.03.2006 Bulletin 2006/12**

(51) Int Cl.:
***G06F 17/30*** *(2006.01)*

(21) Numéro de dépôt: **99402302.6**

(22) Date de dépôt: **21.09.1999**

(54) **Procede de mise a jour d'une memoire associative de type trie, et routeur mettant en oeuvre un tel procede**

Aktualisierungsverfahren für einen inhaltsadressierbaren Trietypspeicher, und Router um solch ein Verfahren zu implementieren

Trie type associative memory updating method, and router for implementing such a method

(84) Etats contractants désignés:
**DE GB**

(30) Priorité: **23.09.1998 FR 9811856**

(43) Date de publication de la demande:
**29.03.2000 Bulletin 2000/13**

(73) Titulaire: **FRANCE TELECOM**
**75015 Paris (FR)**

(72) Inventeurs:
• **Lattmann, Joel**
**77420 Champs sur Marne (FR)**

• **Duret, Christian**
**92320 Chatillon (FR)**
• **Guesdon, Hervé**
**92240 Malakoff (FR)**

(74) Mandataire: **Loisel, Bertrand**
**Cabinet Plasseraud**
**65/67 rue de la Victoire**
**75440 Paris Cedex 09 (FR)**

(56) Documents cités:
**EP-A- 0 380 294          WO-A-96/00945**
**WO-A-98/27662**

**Description**

La présente invention concerne les mémoires associatives, et particulièrement les mémoires de type « TRIE » (du verbe anglais « reTRIEve »).

Le principe de la mémoire « TRIE » a été proposé par R. de la Briandais et E. Fredkin vers la fin des années 1950 (voir E. Fredkin et al.: « *Trie Memory* », Communications of the ACM, Vol.3, No.9, septembre 1960, pages 490-499). Il consiste à découper les chaînes de bits à reconnaître en tranches successives de longueur fixe (de K bits) et à les intégrer dans un tableau T à deux dimensions. Chaque ligne du tableau constitue un registre de $2^K$ *cellules* élémentaires. Un registre (R) est attribué à chaque tranche de la chaîne et on associe une cellule dans le registre à la valeur (V), comprise entre 0 et $2^K$-1 de cette tranche. Le contenu (C = T[R,V]) de la cellule ainsi déterminée représente soit le registre attribué à la tranche suivante (ou *pointeur*), soit une référence de fin d'analyse (ou « *status* ») si l'analyse de la chaîne doit se terminer sur cette tranche.

Le registre attribué à la première tranche de la chaîne, qui est aussi le point d'entrée de la table, est appelé portier. Les données à analyser sous forme de chaînes de bits, c'est-à-dire à comparer avec le contenu de la mémoire TRIE, seront également nommées routes ci-après. On appellera chemin dans la table la succession des cellules chaînées associées à une route. Chaque registre de la table sera dit d'ordre i≥0 s'il est attribué à la (i+1)-ième tranche d'une ou plusieurs routes mémorisées. Le registre portier est donc d'ordre 0. La mémoire TRIE associe à chacun de ses registres d'ordre i≥0 une unique séquence de iK bits correspondant aux iK premiers bits de chaque route dont le chemin dans la table passe par une cellule du registre en question.

L'exemple suivant montre une représentation du stockage des données dans une mémoire TRIE dans le cas particulier où K=4. La valeur de chaque tranche est représentée par un digit en numérotation hexadécimale (0,1, ... ,E, F), et les registres contiennent chacun $2^4$=16 cellules.

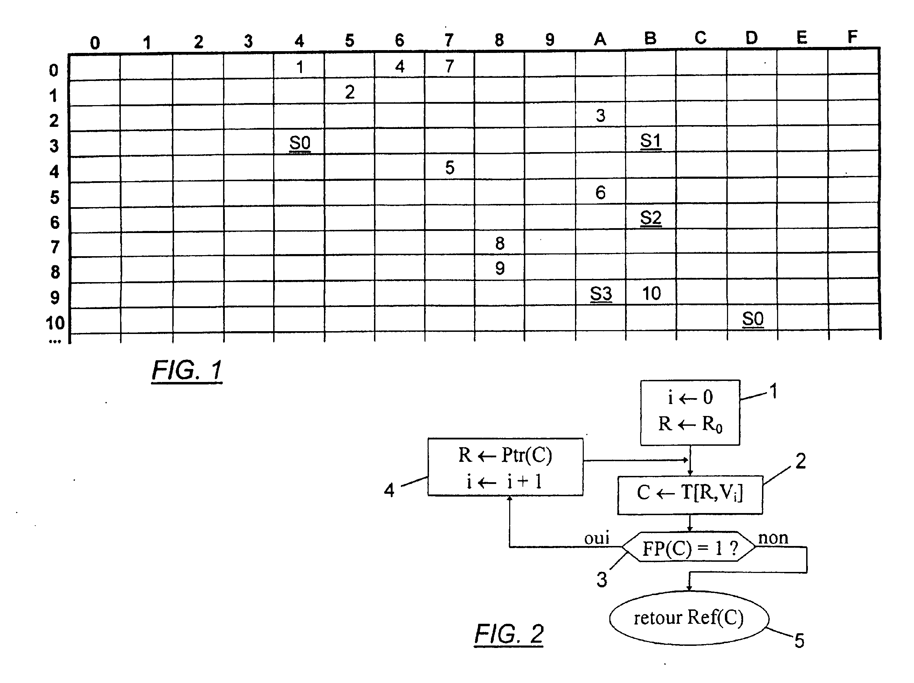

Soit à reconnaître les routes qui débutent par les motifs 45A4, 45AB, 67AB, 788A et 788BD, auxquels on attribue respectivement les status S0, S1, S2, S3 et S0 (un même status peut être partagé par plusieurs routes). En portant le registre R en indice de ligne, la valeur V des tranches en indice de colonne, et en prenant comme portier le registre $R_0$=0, la table de la mémoire TRIE peut se présenter comme représenté sur la figure 1, où les données soulignées sont des status. Les motifs 45A4, 45AB, 67AB, 788A et 788BD sont respectivement représentés dans la table de la figure 1 par les chemins :

T[0,<u>4</u>] → T[1,<u>5</u>] → T[2,<u>A</u>] → T[3,<u>4</u>] :
T[0,<u>4</u>] → T[1,<u>5</u>] → T[2,<u>A</u>] → T[3,<u>B</u>] ;
T[0,<u>6</u>] → T[4,<u>7</u>] → T[5,<u>A</u>] → T[6,<u>B</u>] ;
T[0,<u>7</u>] → T[7,<u>8</u>] → T[8,<u>8</u>] → T[9,<u>A</u>] ;
T[0,<u>7</u>] → T[7,<u>8</u>] → T[8,<u>8</u>] → T[9,<u>B</u>] → T[10,<u>D</u>].

On voit sur cet exemple que tous les motifs commençant par une partie commune de iK bits sont représentés par un début de chemin commun dans la mémoire, menant au registre d'ordre i auquel est associée la séquence formée par ces iK bits.

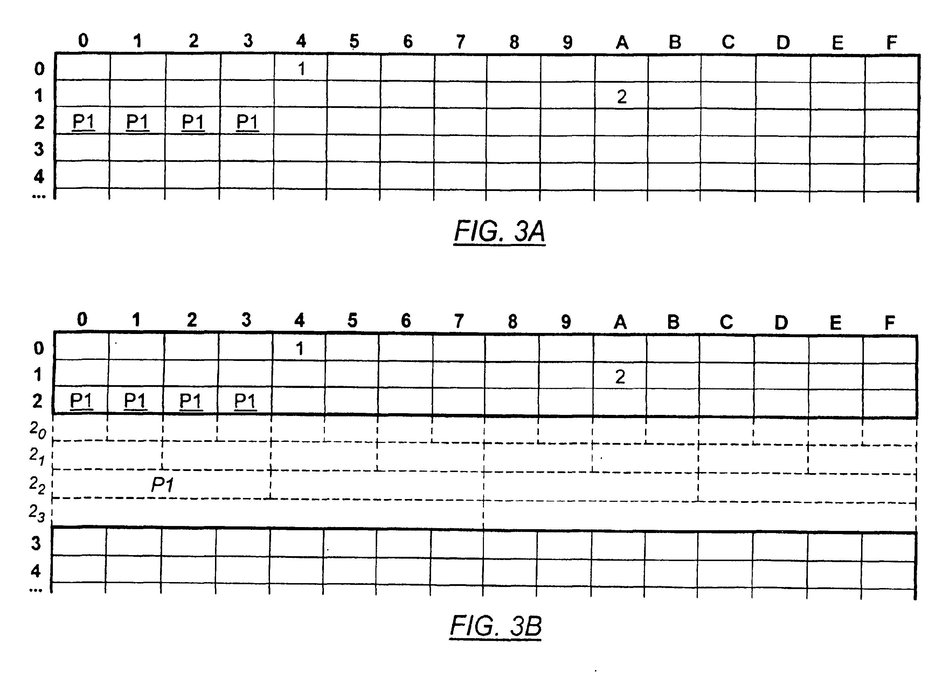

Si l'on considère une route à analyser, découpée en une suite de tranches binaires de valeurs $V_i$ avec 0≤i≤N et {$R_i$} la suite des registres associés aux valeurs $V_i$, $R_0$ désignant encore le registre portier, l'algorithme d'analyse mis en oeuvre peut être celui représenté sur la figure 2.

A l'initialisation 1 de cet algorithme, le rang d'analyse i est mis à 0 et le registre portier $R_0$ est sélectionné comme registre R. Dans chaque itération de rang i, le contenu C de la cellule T[R,$V_i$] désignée par la (i+1)-ième tranche $V_i$ de la route dans le registre d'ordre i sélectionné est lu à l'étape 2. Si cette cellule contient un pointeur de poursuite d'analyse, ce qu'indique au test 3 la valeur 1 d'un bit FP(C) mémorisé dans la cellule, le registre d'ordre i+1 désigné par ce pointeur Ptr(C) est sélectionné comme registre R pour l'itération suivante à l'étape 4, et le rang i est incrémenté. Quand le test 3 révèle une cellule qui ne contient pas un pointeur (FP(C)=0), le status Ref(C) lu dans la cellule concernée est retourné à l'étape 5 comme résultat de la consultation de la table.

Cet algorithme permet l'analyse de routes comportant un nombre quelconque de tranches. Une même table peut être utilisée pour plusieurs types d'analyses en gérant les données à partir de portiers différents. De plus, il permet de maîtriser le temps d'analyse des données : l'analyse d'un nombre N de tranches de K bits durera au plus N fois la durée d'une itération.

L'algorithme de la figure 2 peut être mis en oeuvre de façon très rapide par un composant matériel gérant les accès au tableau de mémoire. Il permet notamment la réalisation de routeurs de haute performance pour des réseaux de télécommunications à commutation de paquets. L'en-tête des paquets est analysé au vol par le composant, et le status associé à une route désigne par exemple un port de sortie du routeur vers lequel doivent être acheminés les paquets portant une adresse de destination conforme à cette route.

Un tel routeur peut être multi-protocoles. Pour cela, on analyse des portions différentes de l'en-tête à partir de portiers différents. Par exemple, une première analyse d'un (ou plusieurs) champ de l'en-tête désignant le protocole employé et/ou la version de ce protocole peut être analysée à partir d'un premier portier. Cette première analyse fournit une référence qui, bien que correspondant à une fin logique d'analyse, peut être matérialisée dans la mémoire TRIE par un pointeur de poursuite d'analyse désignant un autre registre portier à utiliser pour analyser la suite de l'en-tête. La référence en question peut également déclencher des temporisations ou des sauts d'un nombre déterminé de bits dans l'en-tête analysé afin de pouvoir choisir quelle portion de l'en-tête doit être ensuite analysée. Dans la pratique, un certain nombre d'analyses sont généralement exécutées successivement, pour déclencher les opérations requises par les protocoles supportés en fonction du contenu des en-têtes. L'une de ces analyses portera sur l'adresse de destination pour accomplir la fonction de routage proprement dite.

Un routeur du type ci-dessus est décrit dans le brevet français 2 707 775. Au sujet de l'utilisation de mémoire TRIE dans des routeurs, on pourra se reporter à l'article « *Putting Routing Tables in Silicon* », de T.B. Pei et al., IEEE Network Magazine, janvier 1992, pages 42-50.

Le protocole Internet (IP) figure parmi les protocoles de communication que peut supporter le routeur.

Le processus de routage IP repose essentiellement sur l'analyse des adresses de destination de niveau 3 du protocole (voir C. Huitéma : *« Le Routage dans l'Internet »,* Editions Eyrolles, 1995). Les adresses des trames à acheminer sont inscrites dans une table de gestion interne, appelée table de routage ou « forwarding table », où elles sont associées à des paramètres qui caractérisent les accès vers lesquels elles seront dirigées. Dans ses grandes lignes, l'opération de routage consiste à comparer les adresses portées par les trames entrantes avec celles contenues dans la table et à les orienter vers la bonne interface.

La plupart des adresses sont déclarées sous une forme dite *agrégée.* Un agrégat décrit un ensemble d'adresses par la donnée d'un en-tête commun et d'un *manque* qui fixe la longueur en bits de la partie d'adresse à analyser. Cette représentation des données dans la table est fortement liée au mode d'attribution des adresses qui associe un agrégat à un sous-réseau ou à un ensemble de sous-réseaux, et donc implicitement à une localisation géographique. Ces agrégats peuvent faire l'objet de précisions pour certaines de leurs adresses qui nécessitent un routage spécifique.

Par exemple, en représentant les adresses sous forme hexadécimale, les données à mémoriser dans une table de routage peuvent être du type :

4A0, *masque* 10 → Port P1 ;
4A2, *masque* 12 → Port P2 ;
4A28, *masque* 14 → Port P3.

Cela donne une indication d'orientation pour les adresses analysées qui débutent par les motifs binaires soulignés ci-dessous:

0100 1010 00XX, etc. orientation vers le port P1,
0100 1010 0010 XXXX, etc. orientation vers le port P2,
0100 1010 0010 10XX, etc. orientation vers le port P3.

Cette précision apportée par des motifs plus longs est connue sous le nom de gestion de la plus longue concordance (« longest match »). On sait que cette gestion complique considérablement les routeurs employés (voir les articles : « *Routing on Longest-Matching Prefixes* », de W. Doeringer et al., IEEE/ACM Trans. on Networking, Vol. 4, No.1, février 1996, pages 86-97 ; « *Small* Routing Tables *for Fast Routing Lookups* » de M. Degermark et al., Proc. of the SIGCOMM'97 Conférence, Cannes, France, 1 1997, pages 3-14 ; « *Scalable Righ Speed IP Routing Lookups* », de M. Waldvogel et al., Proc. of the SIGCOMM'97 Conference, Cannes, France, 1997, pages 25-36; et les demandes de brevet WO96/00945 et WO98/27662.

A priori, la mémoire TRIE est bien adaptée au rôle de table de routage dans un processus d'acheminement des trames IP. La notion de *motif* s'identifie à la notion d'adresse à reconnaître, et le status peut porter les informations nécessaires à l'orientation des données.

Cependant, les algorithmes utilisés pour tenir à jour le contenu de la mémoire TRIE ne répondent pas de façon satisfaisante aux contraintes imposées par la gestion du « longest match ». Par exemple, il est délicat d'insérer dans la table TRIE à la fois un status S0 valable pour le motif $V_0,...,V_N$ et un autre status S1 valable pour le motif plus long $V_0,..., V_N,V_{N+1},...,V_P$. Par ailleurs, ces algorithmes supposent généralement que les données binaires à analyser ont une longueur multiple de la taille K des tranches, ce qui n'est pas le cas dans le cadre de la gestion d'une table de routage IP dont les masques peuvent avoir des longueurs quelconques.

Un but de la présente invention est de s'affranchir de limitations pratiques rencontrées avec les mémoires TRIE, et particulièrement d'enrichir les possibilités offertes par des routeurs employant de telles mémoires.

L'invention propose ainsi un procédé de mise à jour d'une mémoire associative de type TRIE tel qu'énoncé dans la revendication 1. Des modes de réalisation préférés de ce procédés sont énoncés dans les revendications 2 à 12.

Un autre aspect de la présente invention se rapporte à un routeur de paquets, comprenant un circuit d'analyse de l'en-tête de paquets reçus, à l'aide d'une mémoire associative de type TRIE, et des moyens de mise à jour de la mémoire TRIE, opérant conformément au procédé ci-dessus.

D'autres particularités et avantages de la présente invention apparaîtront dans la description ci-après d'exemples de réalisation non limitatifs, en référence aux dessins annexés, dans lesquels :

- la figure 1, précédemment commentée, montre un exemple de contenu d'une mémoire TRIE ;
- la figure 2, précédemment commentée, est un organigramme de la procédure d'analyse exécutée pour consulter la mémoire TRIE ;
- les figures 3A à 7A montrent des exemples de remplissage d'une mémoire TRIE ;
- les figures 3B à 7B reprennent les exemples des figures 3A à 7A en montrant en outre le contenu d'une table fantôme associée ;
- la figure 8 est un organigramme d'une procédure exécutée pour consulter la table fantôme ;
- la figure 9 est un organigramme d'une procédure exécutée pour propager une référence dans la mémoire ;
- la figure 10, qui est formée en plaçant les figures 10A et 10B l'une au-dessus de l'autre, est un organigramme d'une procédure exécutée en réponse à une commande d'insertion d'un motif dans la mémoire TRIE ;
- la figure 11 est un organigramme d'une partie de la procédure de la figure 10, relative à la dernière tranche du motif inséré ;
- la figure 12, qui est formée en plaçant les figures 12A et 12B l'une au-dessus de l'autre, est un organigramme d'une procédure exécutée en réponse à une commande de suppression d'un motif dans la mémoire TRIE ;
- la figure 13 est un organigramme d'une partie de la procédure de la figure 12, relative à la dernière tranche du motif inséré ; et
- la figure 14 est un schéma synoptique d'un routeur selon l'invention.

Les exemples 1 à 5 ci-dessous, respectivement illustrés par les figures 3 à 7, montrent dans un cas où K=4 comment différents motifs binaires sont intégrés successivement dans une mémoire TRIE conformément à l'invention, en accord avec une gestion correcte du « longest match ».

Exemple 1 : *Insertion du motif 4A0, masque 10 → Port P1*

Dans le cas de la figure 3A, le masque ne coïncide pas avec une frontière de tranche. Pour représenter le motif binaire (0100 1010 00) il est nécessaire de le développer sur toutes les valeurs qui peuvent compléter l'alignement. Cela donne l'ensemble des routes 0100 1010 00XX, avec $X \in \{0,1\}$. La dernière tranche de chacune de ces routes détermine les index des quatre cellules (0000), (0001), (0010), (0011) du registre 2 qui contiennent le status P1. Les status inscrits dans les cellules déterminées en développant une tranche incomplète seront appelés status explicites. Les status explicites sont représentés soulignés sur les figures 3 à 7.

Exemple 2 : *Insertion du motif 4A2, masque 12 → Port P2*

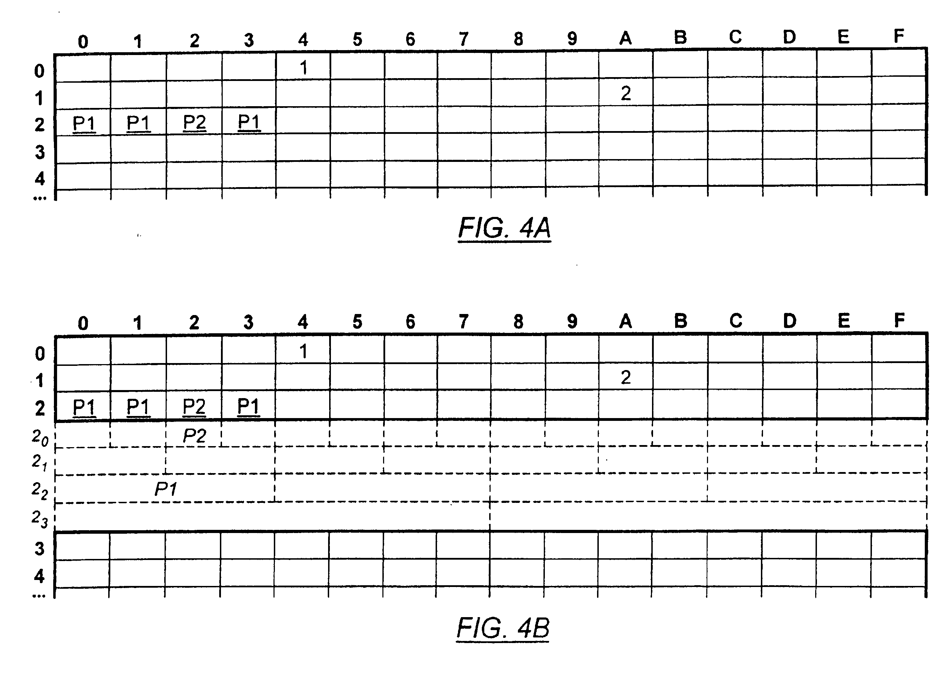

Dans le cas de la figure 4A, le motif intégré (0100 1010 0010) reprend le même chemin dans la mémoire, mais il est plus long que le motif précédent, et il se termine sur une frontière entre tranches d'analyse. Il suffit de remplacer par P2 le status contenu dans la cellule indexée par la valeur de la dernière tranche. Les status qui sont associés à des motifs de cette manière sont également appelés status explicites. On peut noter qu'en inversant l'ordre des exemples 1 et 2, l'insertion du motif (0100 1010 00) aurait respecté le status P2 correspondant à un motif plus long. De façon générale, l'ordre d'insertion des différents motifs présentés dans les exemples n'a pas d'influence sur le contenu final de la mémoire TRIE.

Exemple 3 : *Insertion du motif 4A28, masque 14 → Port P3*

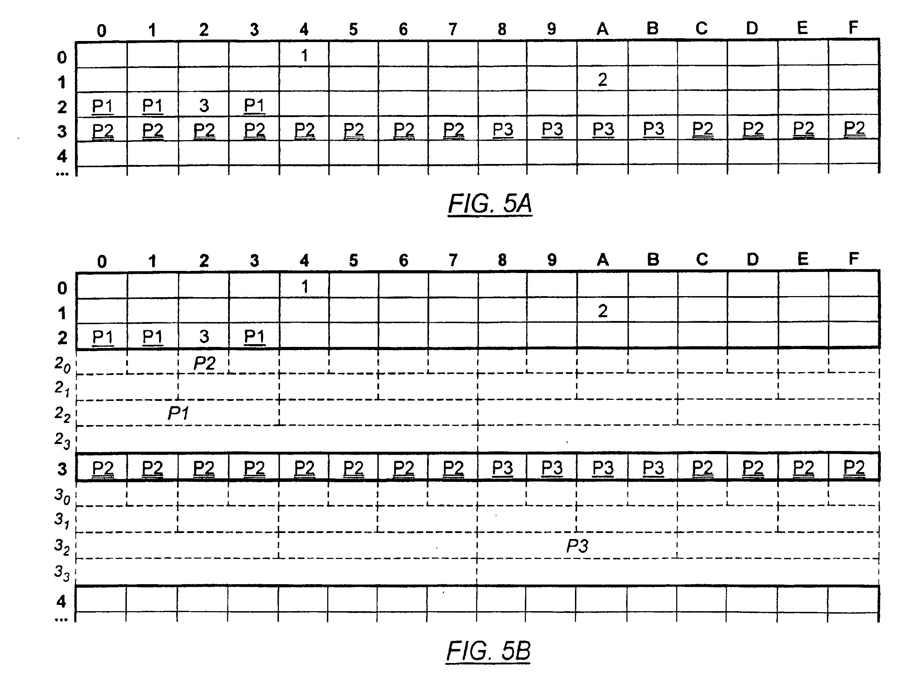

Dans le cas de la figure 5A, la longueur du motif intégré dépasse l'alignement de la dernière tranche des motifs précédents. Dans un premier temps, on intègre le motif sans tenir compte des status existants sur son chemin dans la mémoire. Dans le registre 2, le status P2 est donc remplacé par un pointeur vers le registre 3. Puis le status P3 est associé à l'ensemble des motifs de la forme 4A2X, avec $8 \le X \le B$, suivant le principe présenté dans l'exemple 1. Il faut ensuite caractériser les chemins qui conduisent au status P2. On voit qu'ils correspondent à l'ensemble des motifs de 16 bits qui commencent par les valeurs hexadécimales 4A2 à l'exclusion de ceux déjà utilisés pour décrire le motif plus long 4A28, masque 14. C'est l'ensemble {4A2X, avec $0 \le X < 8$ ou $B < X \le F$}. Le status P2 est inscrit dans les cellules correspondantes du registre 3. De tels status qui sont issus d'une propagation dans la mémoire TRIE d'un status effacé seront appelés status implicites. Les status implicites sont représentés doublement soulignés sur les figures 5 à 7

<u>Exemple 4</u> : *Insertion du motif 4A68, masque 16 → Port P4*

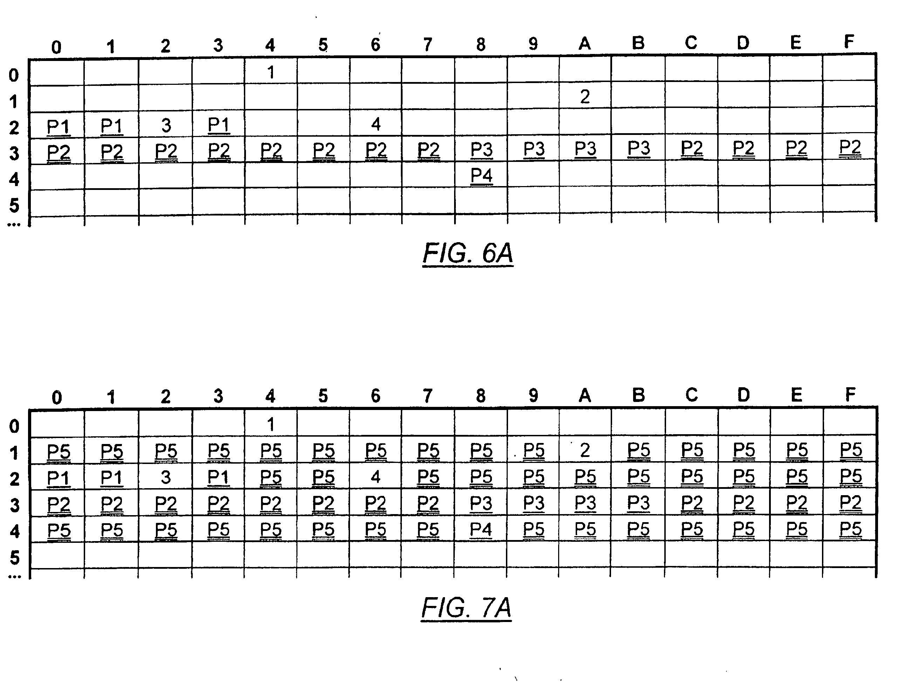

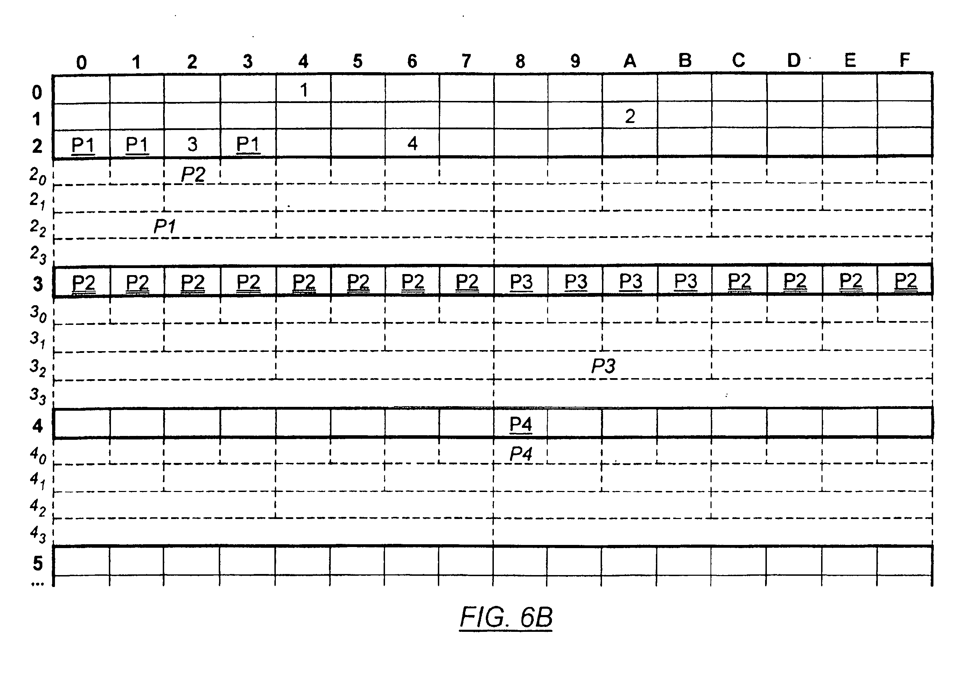

L'intégration de ce motif est conforme à la méthode d'insertion employée dans le cas de l'exemple 1, le status P4 n'étant inscrit que dans une seule cellule puisque le motif a une longueur multiple de K. Le contenu résultant de la mémoire TRIE est illustré par la figure 6A.

<u>Exemple 5</u> : *Insertion du motif 4, masque 4 → Port P5*

Pour le motif 4 (figure 7A), il y a des motifs plus longs déjà présents dans la mémoire. Comme il n'est pas possible d'associer un status à la cellule qui termine ce motif puisqu'elle porte un pointeur, il faut enregistrer les chemins « implicites » qui mènent au status P5. On va donc propager ce status et l'inscrire comme status implicite sur les registres alloués aux chemins précédemment enregistrés qui passent par cette cellule, c'est-à-dire aux chemins décrivant les motifs 4A0, 4A2, 4A28 et 4A68. Comme le motif 4A28 a déjà été traité comme motif plus long que 4A2, le status P2 a déjà été propagé sur le registre 3. Les status implicites P5 ne concernent donc que les registres alloués sur la portion de chemin décrivant le passage du motif 4 au motif 4A2, c'est-à-dire les registres 1 et 2 ainsi que les registres qui décrivent le passage du motif 4 au motif 4A68 qui sont les registres 1, 2 et 4.

On peut généraliser les exemples ci-dessus en décrivant les règles qui s'appliquent aux données inscrites dans la mémoire et qui répondent aux contraintes définies précédemment. On considère des motifs de longueur quelconque, en intégrant la notion de « longest match ».

Soit un motif $\upsilon_0$, de status S et de longueur L, exprimé par une suite binaire $b_0,...,b_{L-1}$ avec $b_k \in \{0,1\}$ pour $0 \leq k < L$. Posons $L = MK + A$ avec A et M entiers et $0 < A \leq K$. Le motif $\upsilon_0$ se présente sous la forme de M+1 tranches de valeurs respectives $V_0,...,V_M$ dont la dernière, de valeur $V_M$, comporte A bits. Un tel motif est représenté dans une table TRIE par $2^{K-A}$ chemins dont les M premières tranches, de valeurs respectives $V_0,...,V_{M-1}$, sont représentées sur un chemin commun aboutissant au registre d'ordre M associé à la séquence de MK bits correspondante, et dont la dernière tranche, tronquée à A bits, est représentée par le status S dans les cellules de ce registre indexées par $V_M.2^{K-A}+Z$ pour $0 \leq Z < 2^{K-A}$ (exemple 1). Si on découpe le registre en $2^A$ groupes de $2^{K-A}$ cellules élémentaires contiguës, on voit que le status S occupe toutes les cellules élémentaires de l'un de ces groupes, indexé par $V_M$. Ces groupes seront appelés cellules virtuelles.

Il se peut que des status différents doivent occuper des cellules virtuelles qui se recouvrent, étant noté que des cellules virtuelles d'intersection non vide sont toujours telles que l'une des deux est incluse dans l'autre. Dans ce cas, par convention, le status à prendre en compte pour l'analyse et à inscrire dans la table, appelé status actif, est celui qui correspond au motif le plus long, c'est-à-dire, d'après ce qui précède, celui dont la valeur de A est la plus grande et donc la cellule virtuelle de taille $2^{K-A}$ est la plus étroite.

Cela amène une notion de hiérarchie dans les cellules virtuelles, quantifiée par la valeur D=K-A (0≤D<K) appelée profondeur. La priorité la plus forte est donnée au status inscrit dans la cellule virtuelle de profondeur la plus faible. Ce problème de la priorité accordée au motif le plus long amène à caractériser de manière plus générale le contenu des cellules de la mémoire.

On peut utiliser pour cela une fonction $\lambda(R,V)$, à valeur entières non négatives, définie par les relations suivantes pour chaque cellule T[R,V] de chaque registre R de la mémoire TRIE $(0 \leq V < 2^K)$ :

$\lambda(R,V) = 0$ si $T[R,V] = 0$ (on considère ici que le contenu des cellules vides de la mémoire est zéro) ; ,
$\lambda(R,V) = A$ si $T[R,V]$ contient un status, explicite ou implicite, issu de l'intégration d'un motif de longueur $\Lambda$ ;
$\lambda(R,V) = \infty$ si $T[R,V]$ contient un pointeur de poursuite d'analyse.

En exploitant la définition de la fonction $\lambda$ et sous les hypothèses précédentes, l'insertion du status S doit satisfaire la condition suivante pour toute cellule V du registre $R_M$ d'ordre M du chemin associé telle que $V_M 2^{K-A} \leq V < (V_M+1) 2^{K-A}$ :

$$si\ L \geq \lambda(R_M,V),\ alors\ T[R_M,V] = S \qquad (R1)$$

Considérons le motif $\upsilon_0$ défini précédemment, affecté par un motif plus long $\upsilon_1$ de longueur L'>L et de status S', découpé en tranches de valeurs $V_0,...,V'_M,...,V_N$ (avec N>M) dont la dernière tranche de valeur $V_N$ comporte B bits. Soient $R'_M,...,R_N$ les registres d'ordre M à N alloués aux tranches $V'_M, ... ,V_N$. On peut remarquer que le motif $\upsilon_1$ n'est un « motif plus long » vis-à-vis du motif $\upsilon_0$ que si d'une part $R'_M=R_M$ et d'autre part la cellule de coordonnées $R_M,V'_M$ se trouve dans la cellule virtuelle indexée par $V_M$ sur le registre $R_M$ (exemples 2 et 3).

La répartition des données dans la mémoire TRIE doit satisfaire les conditions suivantes pour $0 \leq Z < 2^K$ et $V_N 2^{K-B}$

$\leq V' < (V_N+1)2^{K-B}$ :

$$T[R_M, V'_M] = R_{M+1} \qquad (R2)$$

$$si \ L' \geq \lambda(R_N, V'), \ alors \ T[R_N, V'] = S' \qquad (R3)$$

$$si \ L \geq \lambda(R_N, Z), \ alors \ T[R_N, Z] = S \qquad (R4)$$

Si N>M+1, il s'y ajoute la condition suivante : $\forall i \in [M+1, N-1]$ : $T[R_i, V_i] = R_{i+1}$ et

$$si \ L \geq \lambda(R_i, Z), \ alors \ T[R_i, Z] = S \qquad (R5)$$

La relation (R2) exprime que le status contenu dans la cellule indexée par $V'_M$ est remplacé par un pointeur sur le registre suivant, l'inscription d'un pointeur étant prioritaire sur l'inscription de tout status. La condition (R5) décrit la propagation du status S sur toutes les cellules libres des registres $R_{M+1}$ à $R_{N-1}$ s'ils existent. La condition (R3) caractérise le contenu de la cellule virtuelle indexée par $V_N$ sur le registre $R_N$, conformément à la règle R1. La condition (R4) décrit la propagation du status S sur le registre $R_N$ (exemple 3). La fonction $\lambda$ interdit que ce status S soit inscrit dans la cellule virtuelle indexée par $V_N$ qui contient S'.

On peut remarquer que si le motif $\upsilon_1 = V_0,...,V_N$ défini précédemment est lui-même affecté par un motif plus long, $\upsilon_2 = V_0,...,V_P$ (P>N), de status S", l'application des règles R2 à R5 conduit à compléter la mémoire, sur les tranches M+1 à N, M+1 à P et N+1 à P, par le status implicite S dans les registres $R_{M+1}$ à $R_N$ et S' dans les registres $R_{N+1}$ à $R_P$.

Il faut noter que ces règles ne décrivent que les contraintes d'implantation des données dans la mémoire. Elle servent toutefois de fil conducteur aux algorithmes de mise à jour des motifs, qui doivent les respecter à chacune des étapes de leur déroulement.

Les procédures de gestion des chemins, lors des insertions et suppressions de motifs dans la mémoire, traduisent les règles ci-dessus. Elles s'appuient sur un ensemble de structures de données présentées ci dessous.

En ce qui concerne la suppression des motifs, on constate que si certaines des données de mise à jour de la mémoire peuvent être recalculées à partir du contexte et des masques associés aux status, il existe des configurations non récupérables à partir de ces seules données. C'est le cas par exemple des status recouverts complètement puis découverts en totalité ou partiellement par des motifs que l'on supprime. Par exemple, si on insère les motifs 4A0 et 4A2, tous deux de masque 11 et de status respectifs P2 et P3, dans la table de la figure 3A obtenue dans le cas de l'exemple 1, on voit que le status P1 est complètement recouvert sans toutefois avoir été supprimé explicitement. La suppression de l'un des motifs de masque 11 devrait révéler le status recouvert P1, ce que ne permet pas un examen du seul contenu de la mémoire TRIE.

On peut remarquer que de telles restitutions ne sont pas nécessaires au respect des règles d'implantation des motifs dans la table. En effet, il serait possible d'interpréter le recouvrement total d'un status comme la disparition du motif associé sans que cela ne nuise à la cohérence des données. Il s'agit simplement d'un choix de réalisation des algorithmes qui garantit la non-régression du contenu sémantique de la mémoire.

Le maintien du contexte complet de la mémoire nécessite d'implanter « physiquement » dans les algorithmes la notion de cellule virtuelle. Pour cela, on associe à chaque registre R dans lequel au moins un status a fait l'objet d'une commande d'insertion, un tableau de K registres virtuels, ou *registres fantômes.*

L'ensemble de ces registres fantômes forme ce qu'on appelle la table fantôme. Chacun des registres fantômes est indexé par le registre R auquel il se rapporte et par sa profondeur D, définie comme un entier tel que $0 \leq D < K$, et il contient $2^{K-D}$ *cellules fantômes* GT[R,V,D] qui représentent les $2^{K-D}$ cellules virtuelles indexées par les valeurs possibles V de la dernière tranche, de longueur B=K-D, du motif à intégrer. Le contenu de chaque cellule réelle d'un registre est le contenu de la cellule virtuelle à laquelle elle appartient et donc de la cellule fantôme correspondante non vide et de moindre profondeur de sa table fantôme.

Les figures 3B à 7B détaillent le contenu de la table fantôme pour les exemples 1 à 5. Sous chaque registre R concerné, dont le contenu est celui des figures 3A à 7A correspondantes, on a représenté en traits interrompus et en italiques le contenu des K=4 registres fantômes associés $R_D$ pour $0 \leq D < K$.

En fait, l'usage de la table fantôme simplifie considérablement les algorithmes de gestion des recouvrements de status en général, même dans les cas ou le contexte de la table TRIE est suffisant.

Reprenons l'exemple 3 (figures 5A et 5B). L'écriture dans la cellule T[2,2] d'un pointeur sur le registre 3 se traduit, dans la table TRIE, 1 par la propagation du status recouvert P2, sous forme de status implicite dans le registre 3. La restitution du contexte, dans le cas de la suppression du motif 4A28, masque 14 (status P3), nécessite la restauration de la valeur de cellule T[2,2] et donc l'analyse de la provenance du status propagé P2. Il serait possible de raisonner à partir du masque associé, qui a comme valeur 12 et qui indique qu'il est issu du troisième registre (registre d'ordre 2) du chemin sur lequel on l'a propagé. Cependant, l'implantation d'une telle recherche dans un algorithme s'avère complexe et coûteuse en temps de traitement. Il est nettement plus commode de transférer le « fantôme » de P2, lu dans le registre fantôme $2_0$, dans la cellule T[2,2], puis de propager « l'absence » de P2 le long des chemins sur lesquels il était inscrit.

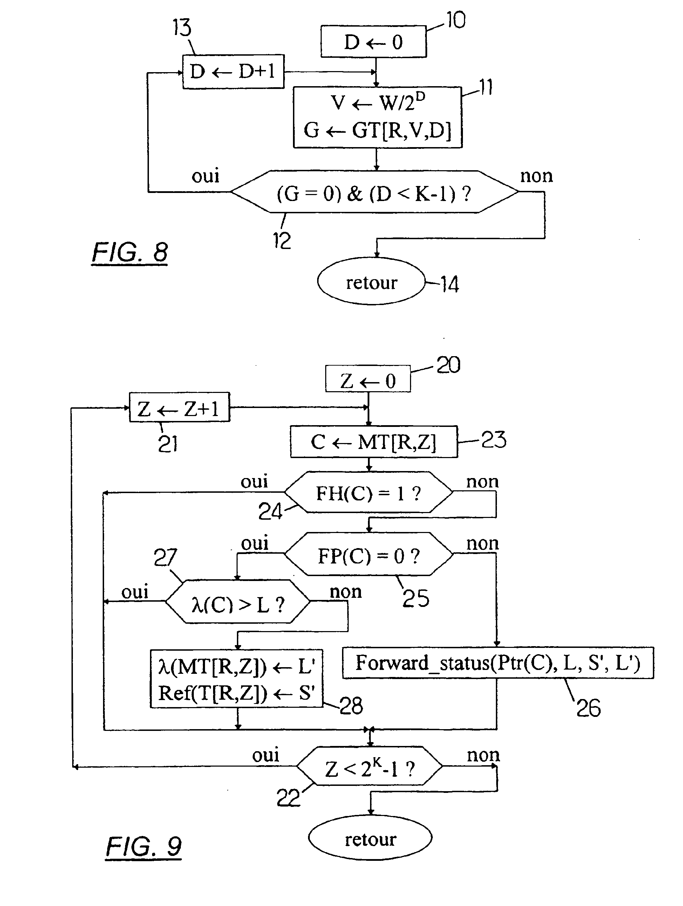

L'organigramme de la figure 8 illustre une manière de consulter la table fantôme afin de récupérer, pour une cellule donnée T[R,W] de la mémoire TRIE, le contenu de la cellule fantôme GT[R,V,D] qui représente la cellule virtuelle de profondeur $D$ minimale incluant la cellule T[R,W] en question. Dans la suite, cette procédure sera notée *Ghost (R, W, G, D).* Elle peut être exécutée sous la forme d'une fonction appelée par les coordonnées R,W de la cellule concernée de la mémoire TRIE, et retournant le status fantôme G associé de profondeur minimale ainsi que cette profondeur D (les arguments soulignés de la fonction *Ghost,* et des autres fonctions considérées ci-après, représentent les valeurs retournées comme résultat de cette fonction, et les arguments non soulignés des valeurs non modifiées par la fonction).

A l'initialisation 10 de la procédure *Ghost(R, W, G, D),* la profondeur D est initialisée à 0. Pour chaque profondeur D examinée, on détermine, à l'étape 11, l'index V de la cellule virtuelle de profondeur D contenant la cellule T[R,W], soit $V=W/2^D$ (V correspond aux K-D bits de poids les plus forts de W), et on charge dans la variable de status G le contenu GT[R,V,D] de la cellule correspondante de la table fantôme. Ce contenu est à 0 si la cellule GT[R,V,D] est vide. Tant que la cellule GT[R,V,D] est vide et que la profondeur maximale K-1 n'est pas atteinte (G=0 et D<K-1 lors du test 12), la variable D est incrémentée à l'étape 13 pour examiner la profondeur suivante. Quand le test 12 montre que $G \neq 0$, le status fantôme G et la profondeur associée D sont retournés à l'étape 14. Quand la table fantôme ne contient aucun status pour la cellule T[R,W] (G=0 et D=K-1 lors du test 12), le status vide G=0 est retourné à l'étape 14.

En plus de la table fantôme, la gestion du contenu de la mémoire TRIE implique une autre table, dite table miroir. La table miroir reflète le contenu de la mémoire TRIE. Elle comporte des registres et des cellules correspondantes. Pour chaque cellule T[R,V] de la mémoire TRIE, la cellule correspondante de la table miroir est notée MT[R,V]. Cette cellule MT[R,V] peut contenir :

- un bit FP indiquant par la valeur FP=1 que la cellule T[R,V] contient un pointeur, et par la valeur FP=0 que la cellule T[R,V] contient un status ou est vide ;
- un bit FH repérant les cellules hantées (FH=1) et non hantées (FH=0). Une cellule T[R,V] d'un registre d'ordre i est dite « hantée » lorsque, pour au moins une profondeur entière D telle que $0 \leq D < K$, il a été inséré un motif de (i+1) K-D bits dont les iK premiers bits forment la séquence associée au registre et dont les K-D derniers bits correspondent aux K-D premiers des K bits formant l'index de cellule V. En d'autres termes, la cellule T[R,V] est hantée si elle appartient à une ou plusieurs cellules virtuelles pour lesquelles la table fantôme contient un status fantôme. Une cellule hantée peut elle-même contenir soit un pointeur, soit un status de longueur au moins égale à celle du status fantôme de profondeur minimale ;
- si la cellule T[R,V] contient un pointeur (FP=1), la valeur *Ptr* de ce pointeur est contenue dans un champ de la cellule correspondante de la table miroir MT[R,V] ;
- si la cellule T[R,V] contient un status (FP=0), la longueur ou masque $\lambda$ du motif associé à ce status est mémorisée dans un champ de la cellule correspondante MT[R,V] de la table miroir. Par convention, la longueur $\lambda=0$ correspond à une cellule vide, les bits FP et FH d'une telle cellule étant également à 0. Pour une cellule vide T[R,V] de la mémoire TRIE, la cellule MT[R,V] correspondante de la table miroir ne contient que des bits à 0.

La figure 9 montre une procédure récursive de propagation d'un status S' associé à un motif $\upsilon$' de longueur L' à partir d'un registre R de la mémoire TRIE, en tenant éventuellement compte de la longueur $L \geq L'$ d'un motif $\upsilon$ pouvant être identique au motif $\upsilon$' ou différent. Cette procédure est notée Forward status $(R, L, S', L')$ .

Quand $\upsilon$' =$\upsilon$, la procédure *Forward_status (R, L, S', L)* gère la mise à jour des status implicites dans le cas où on cherche à inscrire le status S' sur les chemins de motifs plus long déjà présents dans la mémoire. Autrement dit, si on transforme ces derniers en « longest match » du motif saisi.

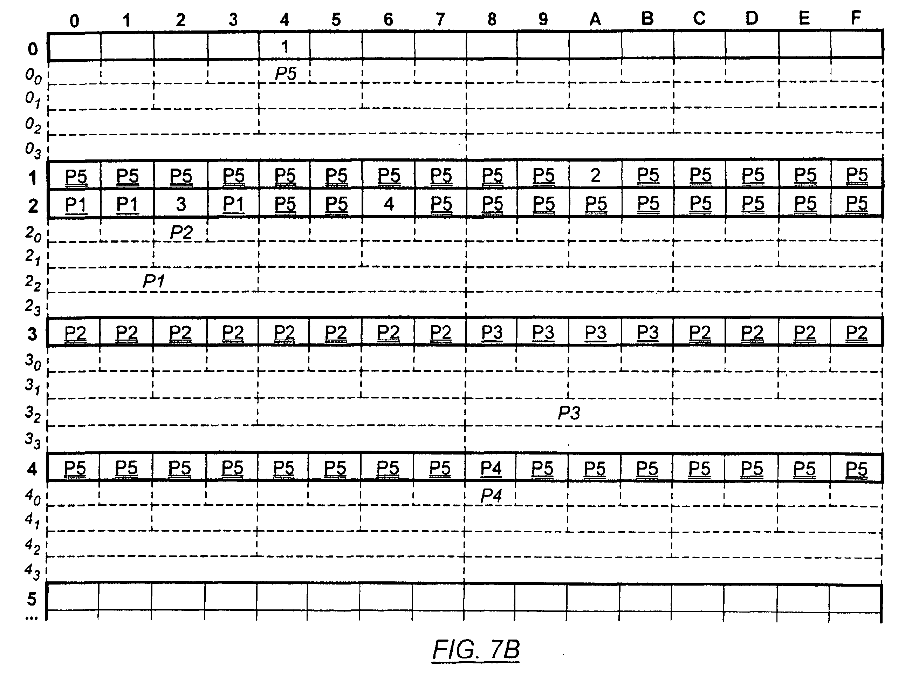

Quand $\upsilon$'$\neq\upsilon$, la procédure *Forward_status $(R, L, S', L')$* gère la propagation des status implicites dans le cas de la suppression d'un motif dont le status S' est recouvert par un pointeur. L'ombre $\upsilon$ de longueur L peut être le fantôme d'un status masqué par S', mais elle peut éventuellement être vide. Par exemple, le passage de la figure 7B à la figure 6B, qui consiste à supprimer le motif 4 de masque 4 et de status P5, revient à propager l'ombre « vide » à la place de P5 depuis la cellule T[0,4], c'est-à-dire à partir du registre 1.

La procédure *Forward_status $(R, L, S', L')$* est récursive et comporte une itération pour chaque tranche de K bits repérée par l'index Z allant de 0 à $2^K-1$. Z est initialisé à 0 à l'étape 20, et incrémenté à l'étape 21 si le test 22 effectué à la fin de l'itération montre que $Z<2^K-1$. La procédure est terminée en ce qui concerne le registre R lorsque $Z=2^K-1$ lors du test 22. Pour chaque tranche Z, le contenu de la cellule MT[R,Z] de la table miroir correspondant à la cellule T[R,Z] de la mémoire TRIE est lu à l'étape 23. Si la cellule T[R,Z] n'est pas hantée (FH(C)=0 au test 24), on examine le bit FP (C) au test 25 pour déterminer si la cellule contient ou non un pointeur. Si FH(C)=0 et FP(C)=1, la procédure *Forward_status(R',L,S',L')* est exécutée à partir du registre R' désigné par le pointeur Ptr(C) contenu dans la cellule (étape 26). Si la cellule T[R,Z] n'est pas hantée et ne contient pas de pointeur (FH(C)=:FP(C)=0), on examine au test 27 si elle est vide ($\lambda$,(C)=0<L) ou si elle contient un status associé à un motif de longueur $\lambda$(C)≤L. Si $\lambda$(C)≤L au test 27, la cellule T[R,Z] de la mémoire TRIE et la cellule correspondante de la table miroir sont mises à jour. Lors de cette mise à jour 28, la longueur L' est écrite dans le champ $\lambda$ de la cellule MT[R,Z] de la table miroir, et le status S' est écrit dans le champ Ref de la cellule T[R,Z] de la mémoire TRIE.

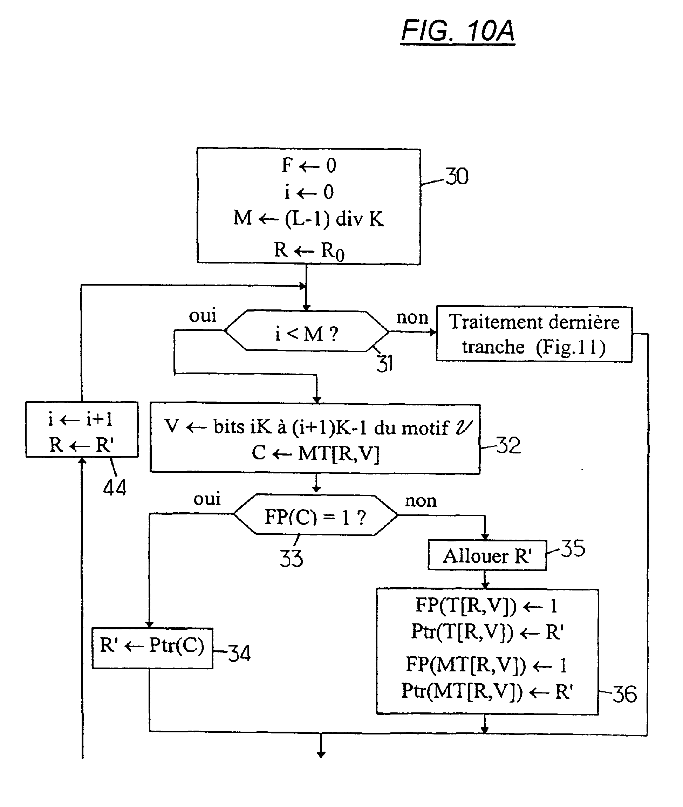

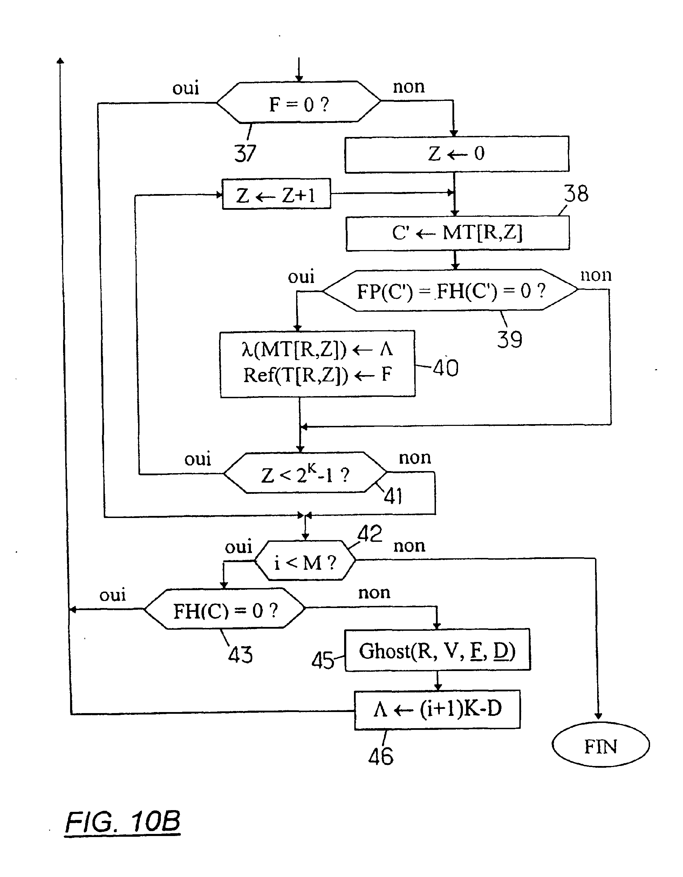

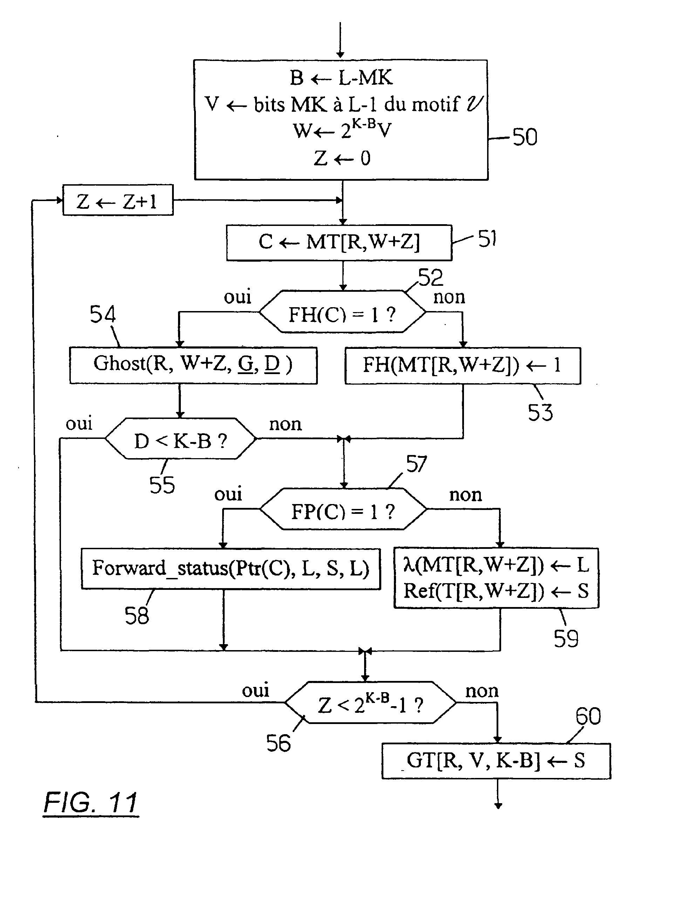

On va maintenant décrire, en référence aux figures 10 et 11, une procédure exécutée pour insérer dans la mémoire TRIE un motif $\upsilon$ dont le masque est de L=Mk+B bits, associé à un status S. A l'initialisation 30, le rang i des itérations est pris à 0, le registre portier $R_0$ d'ordre 0 est sélectionné en tant que registre R, et un status vide (0) est affecté au status actif F. En outre, le nombre M de tranches à traiter avant la dernière tranche du motif à insérer est calculé par division euclidienne de L-1 par K. Si i=M lors du test 31, on passe aux opérations relatives à l'insertion de la dernière tranche, qui seront décrites plus loin en référence à la figure 11. Sinon (0≤i<M), les étapes représentées sur la figure 10 sont exécutées pour traiter la (i+1)-ième tranche du motif V.

A l'étape 32, la variable de K bits V reçoit la (i+1)-ième tranche du motif $\upsilon$, et on lit le contenu de la cellule MT [R,V] de la table miroir de coordonnées R,V, R désignant le registre d'ordre i précédemment sélectionné. Si cette cellule contient un pointeur (FP(C)=1 au test 33), ce pointeur Ptr(C) est affecté à la variable R' à l'étape 34 pour sélectionner le registre d'ordre i+1 qu'il désigne pour l'itération suivante de rang i+1. Si le test 33 montre que FP(C)=0, la cellule ne contient pas de pointeur vers un autre registre, et un registre R' est alloué à l'étape 35 en le choisissant dans une liste de registres disponibles de la mémoire TRIE. Un registre est dit disponible lorsque chacune de ses cellules ne contient pas de pointeur et n'est pas hantée. A l'étape 36, la cellule de coordonnées R,V est mise à jour dans la mémoire TRIE et dans la table miroir. Cette mise à jour consiste à mettre à 1 le bit FP et à écrire le pointeur R' du registre alloué dans le champ Ptr de la cellule.

Après l'étape 34 ou 36, et après les traitements de la figure 11 si i=M, on examine si un status actif, de valeur F, a été recouvert par un pointeur sur le chemin suivi (test 37). En présence d'un tel status actif (F≠0 au test 37), ce status est inscrit par défaut dans chaque cellule du registre R qui n'est pas hantée et ne contient pas de pointeur. Pour chaque tranche Z de K bits désignant une cellule du registre R, le contenu de la cellule de coordonnées R,Z dans la table miroir est lu à l'étape 38, et si ce contenu montre que la cellule correspondante de la mémoire TRIE n'est pas hantée et ne contient pas de pointeur (FP(C')=FH(C')=0 au test 39), les cellules de coordonnées R, Z de la mémoire TRIE et de la table miroir sont mises à jour. Cette mise à jour 40 consiste à écrire le status actif F dans le champ Ref de la cellule T[R,Z], et la longueur A de ce status F dans le champ $\lambda$ de la cellule MT[R,Z].

En l'absence de status actif (F=0 au test 37), ou une fois que l'écriture du status actif dans le registre R est terminée ($Z=2^K-1$ au test 41), on termine la procédure d'insertion si i=M au test 42.

Si i<M, on examine si la cellule du registre d'ordre i par laquelle passe le chemin du motif inséré est une cellule hantée (test 43). Si cette cellule n'est pas hantée (FH(C)=0), on n'a pas besoin de considérer ses éventuels status fantômes, et l'itération de rang i se termine à l'étape 44 en incrémentant le rang i et en prenant R=R' comme registre sélectionné d'ordre i+1 pour l'itération suivante.

Si la cellule est hantée (FH(C)=1 au test 43), la fonction *Ghost (R, V, F, D),* est appelée à l'étape 45 pour obtenir le status actif F qui correspond au motif qui, avant l'insertion du motif $\upsilon$, remplissait la condition de « longest match » pour la cellule de coordonnées R,V. A l'étape 46, la longueur $\Lambda$ de ce status actif F est calculée à l'aide de la profondeur D retournée par la fonction *Ghost :* $\Lambda$=(i+1)K-D. Après l'étape 46, l'itération de rang i se termine par l'étape 44 précitée.

L'itération de rang i=M de la procédure d'insertion du motif $\upsilon$ commence à l'étape 50 de la figure 11, dans laquelle :

- on détermine le nombre B de bits de la dernière tranche (B=L-MK) ;
- la variable de B bits V reçoit les B derniers bits du motif $\upsilon$ ;
- la variable de K bits W est prise égale à $2^{K-B}V$ ;
- l'index Z est initialisé à 0.

La cellule virtuelle à laquelle aboutit le motif *V* est examinée pour procéder aux mises à jour requises, en examinant chaque cellule de la table miroir appartenant au registre R et indexée par W+Z pour $0≤Z<2^{K-B}-1$. Le contenu de cette cellule de la table miroir est lu à l'étape 51.

Si la cellule correspondante de la table TRIE n'est pas hantée (FH(C)=0 au test 52), il convient de modifier la valeur de ce bit FH dans la cellule de la table miroir de coordonnées R,W+Z (étape 53), puisque le status S sera écrit dans la cellule correspondante de la table fantôme de profondeur K-B. Si la cellule T[R,W+Z] était déjà hantée (FH(C) =1 au test 52), la fonction *Ghost* est appelée à l'étape 54 pour obtenir la profondeur minimale D du status fantôme associé G. Si cette profondeur D est plus petite que celle K-B correspondant au status inséré S (test 55), le status inséré S est affecté par un « longest match » relativement à la cellule examinée T[R,W+Z], de sorte que les opérations relatives à cette cellule sont terminées, c'est-à-dire qu'on passe directement au test de fin de boucle 56. A l'étape 57 qui suit l'étape 53, ou le test 55 si D≥K-B, on teste la valeur du bit FP relatif à la cellule examinée T[R,W+Z], pour déterminer si elle contient un pointeur. Dans l'affirmative, on exécute la procédure *Forward_status(Ptr(C), L, S, L)* pour propager le status S à partir du registre désigné par le pointeur Ptr(C) contenu dans cette cellule, conformément à l'organigramme de la figure 9 (étape 58). Sinon (FP(C)=0), la cellule courante est simplement mise à jour à l'étape 59 en écrivant la longueur L dans le champ λ, de la cellule MT[R,W+Z] de la table miroir, et le status S dans le champ Ref de la cellule correspondante de la table TRIE.

Une fois que toutes les cellules élémentaires de la cellule virtuelle d'index V ont été examinées (Z=$2^{K-B}$ au test 56), le motif inséré S est écrit dans la cellule GT[R,V,K-B] de la table fantôme à l'étape 60. On passe alors à l'étape 37 de la figure 10B pour examiner s'il y a lieu de mettre à jour des cellules libres du registre d'ordre M. La procédure d'insertion se terminera après le test 42 (i=M).

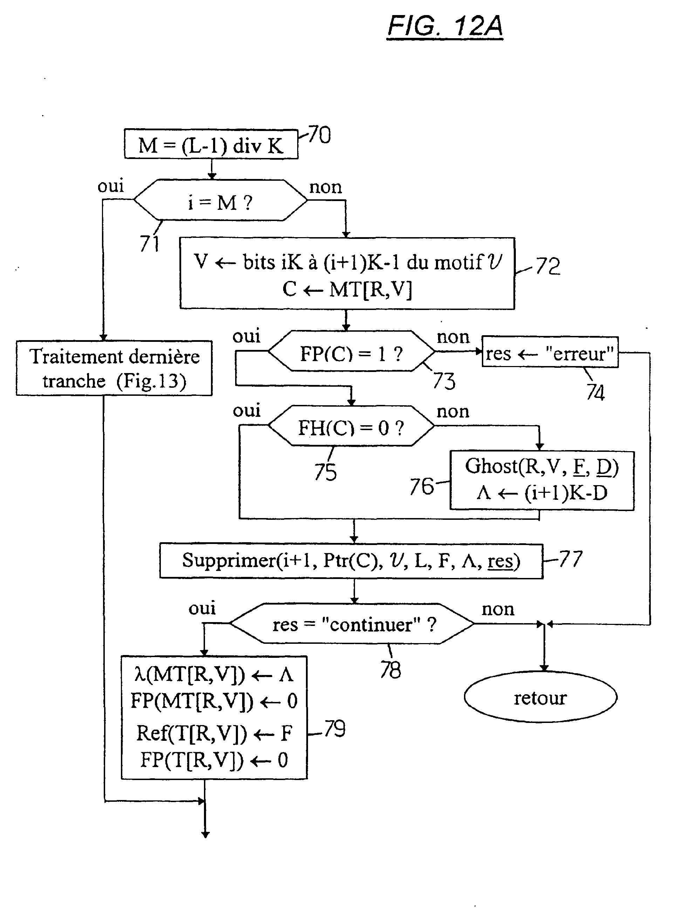

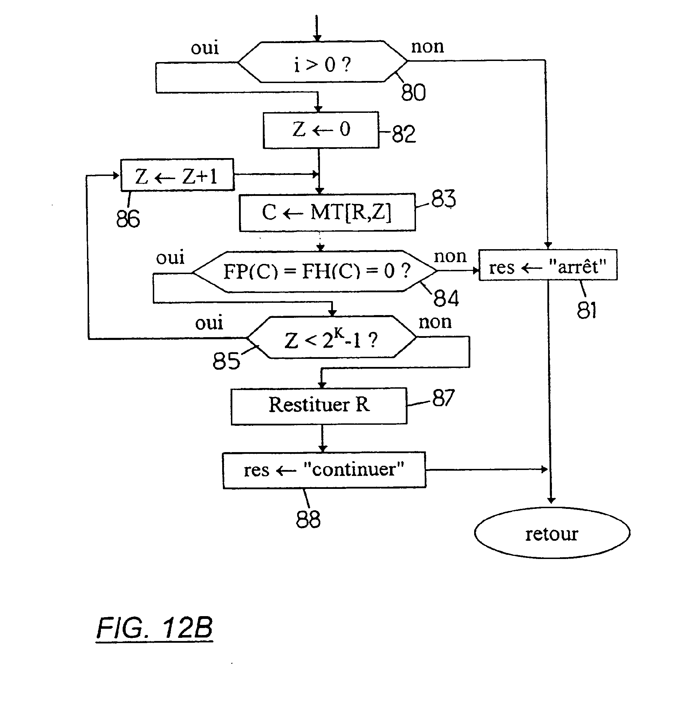

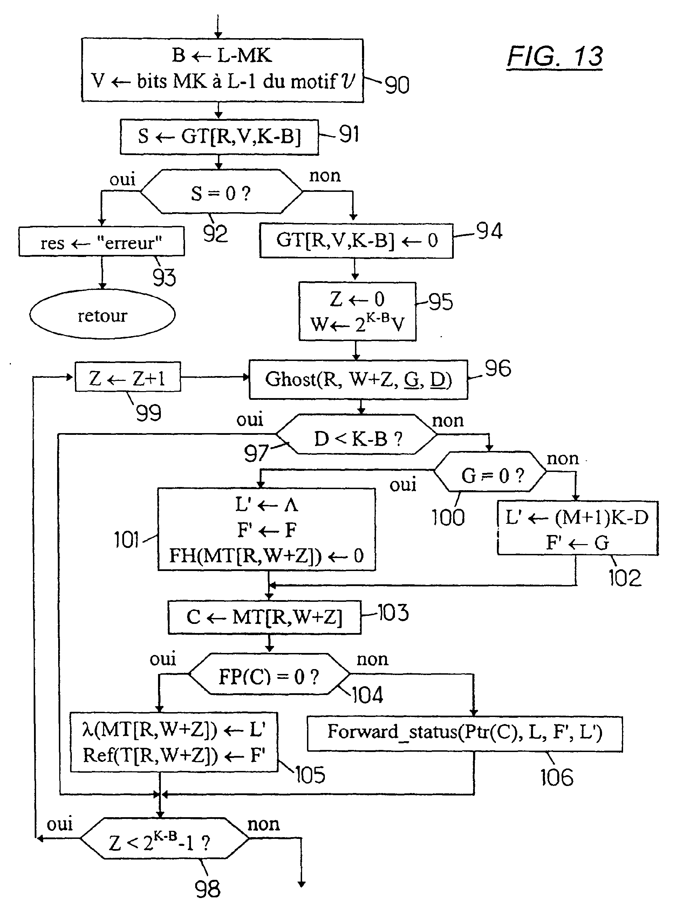

La procédure utilisable pour supprimer de la mémoire TRIE un motif *V* de L=MK+B bits peut être sous la forme d'une fonction Supprimer (*i, R, υ, L,* F, Λ, *res*) appelée de manière récursive. A l'initialisation, la fonction est appelée au rang i=0 avec un status actif vide (F=0, Λ=0) . L'organigramme de la fonction, telle qu'appelée au rang i ≥ 0 est représentée sur les figures 12 et 13.

Au départ (étape 70), le nombre M de tranches du motif υ à examiner avant la dernière tranche est calculé par division euclidienne de L-1 par la longueur K d'une tranche. Si le rang i d'appel de la fonction est égal à M (test 71), la dernière tranche est traitée de la manière décrite plus loin en référence à la figure 13.

Sinon (i<M), la variable de K bits V reçoit la (i+1)-ième tranche de K bits du motif υ, et on lit le contenu de la cellule de la table miroir de coordonnées R,V (étape 72). Si la cellule correspondante de la mémoire TRIE ne contient pas de pointeur (test 73), c'est que le motif dont on demande la suppression n'est pas contenu dans la mémoire TRIE. Dans ce cas, la fonction retourne au rang i un résultat res indiquant une erreur (étape 74), et la procédure de suppression se termine. Lorsque la cellule contient bien un pointeur, on examine si elle est hantée au test 75. Si la cellule est hantée (FH(C)=1), il convient de récupérer comme status actif F le status fantôme de plus faible profondeur associé à la cellule. Ceci est effectué à l'étape 76 en appelant la fonction *Ghost (R, V, F, D)* telle que décrite en référence à la figure 8 . La longueur Λ de ce status actif F est en outre calculée : A=(i+1)K-D.

La fonction *Supprimer* est alors appelée au rang i+1 pour lequel le registre d'ordre i+1 désigné par le pointeur Ptr(C) lu au rang i dans la table miroir est sélectionné. La fonction est invoquée à l'étape 77 avec les arguments *Supprimer (i+1, Ptr(C),* υ, L, F, Λ, *res*). Si le résultat retourné res n'indique pas que la procédure doit continuer (test 78), l'exécution de la fonction au rang i est terminée.

Lorsque la fonction appelée au rang i+1 retourne le résultat « continuer », la procédure se poursuit au rang i par la mise à jour de la cellule de coordonnées R,V dans la table TRIE et dans la table miroir. Cette mise à jour 79 consiste à mettre à 0 le bit FP, et à écrire le status actif F dans le champ Ref de la cellule T[R,V] et sa longueur Λ dans le champ λ de la cellule MT[R,V]. S'il n'y a pas de status actif, c'est-à-dire si F=0 et A=0 (ce qui implique que la cellule n'est pas hantée : FH=0), la mise à jour 79 revient à mettre tout à zéro dans la cellule de coordonnées R,V.

Les opérations représentées sur la figure 12B sont effectuées après la mise à jour 79 si i<M, et après le traitement représenté sur la figure 13 si i=M.

Si i=0 (test 80) ou si le registre R d'ordre i contient au moins un pointeur ou au moins une cellule hantée, alors l'exécution de la fonction au rang i se termine à l'étape 81 en retournant comme résultat res une indication d'arrêt. Pour vérifier si le registre R d'ordre i contient au moins un pointeur ou au moins une cellule hantée, on exécute une boucle sur les tranches Z de K bits, initialisée par Z=0 à l'étape 82. Dans chaque itération de cette boucle, on lit le contenu de la cellule MT[R,Z] de la table miroir à l'étape 83, et on examine les bits FP et FH de cette cellule à l'étape 84. Le résultat res=« arrêt » est retourné si FP(C)=1 ou FH(C)=1. Sinon, l'index de tranche Z est comparé à $2^K$-1 au test 85, et incrémenté à l'étape 86 si Z<$2^K$-1. Quand Z=$2^K$-1, toutes les cellules du registre R ont été libérées, c'est-à-dire qu'elles ne contiennent plus de pointeur et ne sont plus hantées. Le registre R peut donc être restitué à l'étape 87 dans la liste des registres disponibles, allouables dans les procédures d'insertion (étape 35 de la figure 10A). L'exécution de la fonction au rang i est alors terminée à l'étape 88 en retournant le résultat « continuer ».

En référence à la figure 13, les traitements effectués pour la dernière tranche du motif supprimé υ (exécutés quand i=M au test 71) commencent à l'étape 90 en calculant la longueur B=L-MK de cette dernière tranche, et en chargeant les B derniers bits du motif υ dans la variable de B bits V. Le status S contenu dans la cellule fantôme GT[R, V,K-B] est lu à l'étape 91. Si ce status S a la valeur 0 (test 92), c'est qu'on a demandé la suppression d'un motif auquel n'était associé aucun status, de sorte que la procédure de suppression se termine au rang M en retournant un résultat res indiquant une erreur (étape 93).

Le status S est effacé à l'étape 94 en écrivant la valeur 0 dans la cellule GT[R,V,K-B] de la table fantôme. On procède ensuite à la mise à jour de la cellule virtuelle, dans une boucle sur les différentes tranches de K-B bits qui complètent la tranche V de B bits. Cette boucle est initialisée à l'étape 95 par les valeurs Z=0 et W=$2^{K-B}$V. Dans chaque itération de cette boucle, la fonction *Ghost (R, W+Z, G, D)* décrite en référence à la figure 8 est appelée à l'étape 96. Si la procédure *Ghost* a retourné un status fantôme G de profondeur D plus petite que K-B(test 97), la suppression du status S est sans incidence sur le contenu de la cellule T[R,W+Z]. L'itération Z se termine alors au test 98, où Z est comparé à $2^{K-B}$-1. Tant que Z<$2^{K-B}$-1, l'index Z est incrémenté à l'étape 99 avant de répéter l'étape 96. Si le test 97 montre que la profondeur D retournée par la procédure Ghost est au moins égale à K-B, on examine à l'étape 100 si le status fantôme G retourné par la procédure *Ghost* a la valeur 0 (pas de status fantôme) ou non. S'il a la valeur 0, la suppression fait que la cellule T[R,W+Z] n'est plus hantée, de sorte que le bit FH de cette cellule est mis à 0 dans la table miroir à l'étape 101. En outre, le status F', actif pour la suite de la procédure, reçoit le status F inclus dans les arguments d'appel de la fonction Supprimer au rang M (le status actif F obtenu à l'étape 76 la plus récente ou F=0) , et la variable L' reçoit la longueur Λ de ce status F.

S'il subsiste un status fantôme pour la cellule T[R,W+Z], de profondeur au moins égale à celle du status supprimé S (G≠0 au test 100), ce status fantôme G devient le status actif : il est affecté au status F' à l'étape 102, et sa longueur (M+1)K-D est affectée à la variable L'.

A l'étape 103, le contenu de la cellule MT[R,W+Z] de la table miroir est lu. Si cette cellule ne contient pas de pointeur (FP(C)=0 au test 104), la cellule de coordonnées R,W+Z est simplement mise à jour, en écrivant le status actif F' dans le champ Ref de la table TRIE, et sa longueur L' dans le champ λ de la table miroir (étape 105). Si la cellule contient un pointeur (FP(C)=1 au test 104), le status actif F' de longueur L' est propagé à l'étape 106 à partir du registre d'ordre M+1 désigné par le pointeur Ptr(C) obtenu dans la cellule MT[R,W+Z], en tenant compte de la longueur L du status supprimé. Ceci est effectué en appelant la procédure récursive *Forward_status (Ptr(C), L, F', L')* telle que décrite en référence à la figure 9.

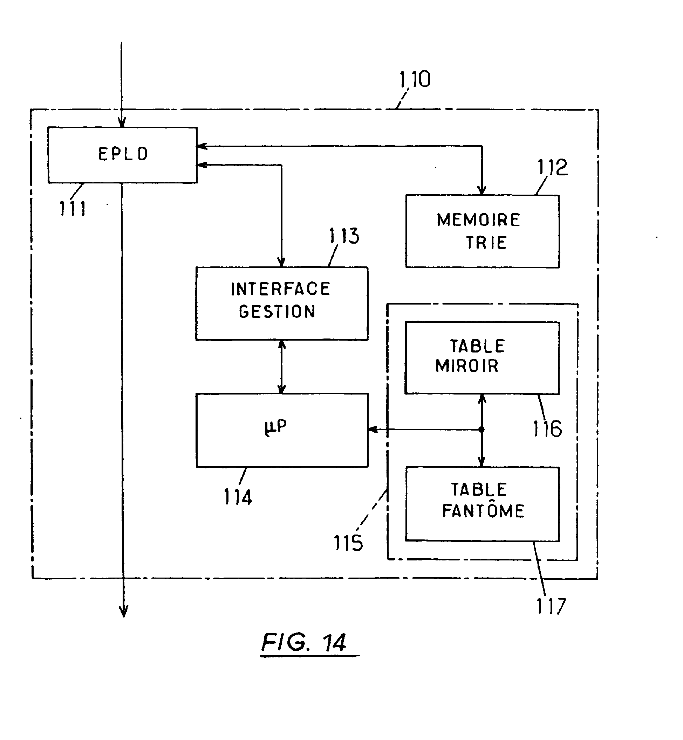

La figure 14 montre un schéma de principe d'un exemple de routeur 110 mettant en oeuvre la présente invention. Un circuit d'analyse 111, pouvant être un réseau programmable de type EPLD, contrôle les accès à la mémoire TRIE 112. Le circuit 111 applique l'algorithme d'analyse représenté sur la Figure 2 à des chaînes de N bits incluses dans les en-têtes de paquets reçus à l'entrée du routeur 110. Ces paquets peuvent notamment consister en des cellules ATM (Asynchronous Transfer Mode). Comme indiqué précédemment, le routeur 110 peut être multi-protocoles, et analyser différentes chaînes de l'en-tête des paquets à partir de portiers différents de la mémoire TRIE 112. Le circuit 111 est programmé pour déclencher les opérations requises en fonction du résultat de l'analyse. En particulier, il oriente le paquet vers l'un ou l'autre d'un ensemble de ports de destination en fonction d'une analyse de l'adresse de destination contenue dans l'en-tête.

L'un de ces ports de destination est une interface 113 de gestion du routeur. Cette interface 113 comporte des registres dans lesquels le circuit d'analyse 111 transfère des paquets contenant des informations concernant le routeur lui-même, et en particulier des instructions d'insérer ou de supprimer des motifs de la table de routage. Il est à noter que l'interface 113 est un moyen parmi beaucoup d'autres de transférer des paquets, et que les informations concernant le routeur ne sont pas nécessairement sous la forme de paquets.

Le routeur 110 comporte en outre un processeur 114 chargé d'exécuter les procédures des Figures 8 à 13 relatives aux mises à jour de la table TRIE. Contrairement à l'analyse des paquets par le circuit 111, ces mises à jour ne sont pas obligatoirement effectuées en temps réel. Dans l'espace mémoire 115 auquel accède le processeur 114, on prévoit une zone 116 pour contenir la table miroir et une zone 117 pour contenir la table fantôme.

Lorsque l'exécution des procédures de mise à jour requiert l'écriture de données dans la mémoire TRIE 112 (étapes 28, 36, 40, 59, 79 et 105 des Figures 9 à 13), le processeur 114 écrit des commandes correspondantes dans des registres de l'interface de gestion 113. Ces registres peuvent être lus par le circuit 111 pendant qu'il n'est pas en train de traiter un paquet, afin que le contenu de la mémoire TRIE 112 soit modifié comme requis. Le contenu de la table miroir 116 et de la table fantôme 117 n'est modifié effectivement par le processeur 114 qu'à la fin de la procédure d'insertion ou de suppression de motif conduisant à une telle modification.

La représentation des données peut prendre des formes différentes dans les mémoires 112, 116 et 117. Dans la mémoire TRIE 112 à laquelle le circuit 111 accède en temps réel, il se peut qu'il n'y ait pas de différence formelle de représentation entre un pointeur et un status, bien que ces deux notions soient distinctes dans la logique dans l'algorithme d'analyse. Le bit FP n'est pas nécessairement présent explicitement dans les cellules de la mémoire 112. Dans cette mémoire, un status peut avoir la même forme qu'un pointeur qui désignerait un autre registre portier de la mémoire, tout en déclenchant une temporisation ou encore un saut d'un nombre déterminé de bits dans la chaîne analysée. Cela n'empêche pas que l'algorithme d'analyse de la Figure 2 soit mis en oeuvre sur le plan logique.

La table miroir 116 est une image fonctionnelle de la mémoire TRIE 112, formant une matrice de mêmes dimensions. Cette table 116 permet de s'affranchir des contraintes de représentation nécessaires au fonctionnement du circuit 111. Elle permet au processeur 114 de suivre les chemins, de caractériser, inscrire ou propager les status de fin de motif sans avoir à tenir compte de la structure des données correspondantes dans les cellules de la mémoire TRIE 112. Les cellules de la table miroir 116 contiennent une image simplifiée de celles de la mémoire TRIE 112. Comme on l'a vu, il n'est pas nécessaire de faire figurer les status dans la table miroir 116, mais seulement la longueur des motifs associés. Il est suffisant que les status soient enregistrés dans la table fantôme 117.

La table fantôme 117 mémorise les status associés aux motifs binaires insérés, chaque status étant mémorisé à un emplacement de la table fantôme 117 qui correspond à la cellule de la mémoire TRIE 112 où il serait mémorisé si le motif associé était le seul motif inséré.

Dans la table fantôme 117, les status peuvent être enregistrés sous une forme proche de celle fournie par l'utilisateur, le processeur 114 se chargeant des traductions requises. La structure d'adressage dans la table fantôme 117 peut varier dynamiquement selon les registres de la mémoire TRIE qui nécessitent des registres fantômes (par exemple, seul le registre 2 a besoin de registres fantômes dans le cas illustré par la Figure 3B). D'autres organisations de la table fantôme pourraient être adoptées. Par exemple le bit hanté/non hanté FH de chaque cellule de la table miroir pourrait être remplacé par K bits indiquant chacun s'il y a un status fantôme de profondeur D ($0 \leq D < K$) pour la cellule en question. Dans un tel cas, l'allocation des ressources de mémoire de la table fantôme 117 est gérée au niveau des cellules et non au niveau des registres.

## Revendications

1. Procédé de mise à jour d'une mémoire associative de type TRIE (112), organisée sous forme d'un ensemble de registres de $2^K$ cellules comprenant au moins un registre portier à partir duquel des chaînes de bits sont analysées par tranches successives de K bits, K étant un entier au moins égal à 1, chaque cellule non vide de la mémoire TRIS contenant des données comportant soit un pointeur de poursuite d'analyse (Ptr) soit une référence (Ref), la mémoire TRIE associant à chaque registre un ordre entier $i \geq 0$ et une séquence respective de iK bits, l'analyse d'une chaîne de bits comprenant, à partir du rang i=0 pour lequel le registre portier d'ordre 0 est sélectionné, au moins une itération de rang i comprenant les opérations suivantes :

   - lire des données dans une cellule du registre d'ordre i sélectionné, désignée par la (i+1)-ième tranche de K bits de la chaîne analysée ;
   - si les données lues contiennent un pointeur de poursuite d'analyse, sélectionner un registre d'ordre i+1 de la mémoire TRIE désigné par ledit pointeur, la séquence associée au registre d'ordre i+1 sélectionné étant formée des (i+1)R premiers bits de la chaîne analysée, puis procéder à l'itération de rang i+1 ;
   - si les données lues sont des données de fin d'analyse ne contenant pas de pointeur de poursuite d'analyse, terminer l'analyse en délivrant une référence contenue dans lesdites données de fin d'analyse,

   **caractérisé en ce qu'**on enregistre les données dans les cellules de la mémoire TRIE, à l'aide d'une une table miroir (116), en réponse à des commandes d'insertion et de suppression de motifs binaires de longueur variable associés chacun à une référence, de façon telle que lors de l'analyse d'une chaîne de bits, la référence délivrée soit celle associée au plus long des motifs binaires coïncidant avec le début de la chaîne analysée,
   **en ce que** la table miroir (116) comprend des registres de $2^K$ cellules correspondant chacun à un registre respectif de la mémoire TRIE (112) affecté au registre portier, chacune des $2^K$ cellules d'un registre de la table miroir correspondant à une cellule respective du registre correspondant de la mémoire TRIE,
   et **en ce que** chaque cellule de la table miroir correspondant à une cellule non vide de la mémoire TRIE contient au moins :

   - une information (FP) indiquant si la cellule correspondante de la mémoire TRIE contient un pointeur de poursuite d'analyse ;
   - si la cellule correspondante de la mémoire TRIE contient un pointeur de poursuite d'analyse, le pointeur de poursuite d'analyse en question (Ptr) ;
   - si la cellule correspondante de la mémoire TRIE ne contient pas de pointeur de poursuite d'analyse mais une référence (Ref), la longueur ($\lambda$) d'un motif binaire associé à cette référence.

2. Procédé selon la revendication 1, dans lequel chaque cellule de la table miroir (116) correspondant à une cellule non vide d'un registre d'ordre $i \geq 0$ de la mémoire TRIE (112) contient en outre :

   - une information (FH) indiquant si la cellule correspondante de la mémoire TRIE est hantée, c'est-à-dire si, pour au moins une profondeur entière D telle que $0 \leq D < K$, il a été inséré un motif de (i+1)K-D bits dont les iK premiers bits forment la séquence associée audit registre d'ordre i, et dont les K-D derniers bits correspondent aux K-D premiers des K bits désignant ladite cellule correspondante de la mémoire TRIE au sein dudit registre d'ordre i.

3. Procédé selon la revendication 2, dans lequel on utilise une table fantôme (117) mémorisant les références associées aux motifs binaires insérés, et dans lequel la table fantôme mémorise, pour chaque cellule hantée d'un registre d'ordre i≥0 de la mémoire TRIE (112), chaque référence associée à un motif inséré de (i+1)K-D bits, tel que 0≤D<K, dont les iK premiers bits forment la séquence associée audit registre d'ordre i, et dont les K-D derniers bits correspondent aux K-D premiers des K bits désignant ladite cellule hantée de la mémoire TRIE au sein dudit registre d'ordre i.

4. Procédé selon la revendication 3, dans lequel on consulte la table fantôme (117) pour obtenir, relativement à une cellule hantée d'un registre d'ordre i de la mémoire TRIE (112), la référence associée au motif inséré de (i+1)K-D bits et de profondeur D minimale dont les iK premiers bits forment la séquence associée audit registre d'ordre i, et dont les K-D derniers bits correspondent aux K-D premiers des K bits désignant ladite cellule de la mémoire TRIE au sein dudit registre d'ordre i.

5. Procédé selon la revendication 3 ou 4, dans lequel la table fantôme (117) comprend, pour chaque registre d'ordre i de la mémoire TRIE (112) comportant au moins une cellule hantée et pour chaque profondeur D telle que 0≤D<K, $2^{K-D}$ emplacements de mémoire contenant respectivement, le cas échéant, les références associées aux motifs insérés de (i+1) K-D bits dont les iK premiers bits forment la séquence associée audit registre d'ordre i.

6. Procédé selon les revendications 4 et 5, dans lequel l'obtention d'une référence relativement à une cellule hantée d'un registre d'ordre i de la mémoire TRIE (112), comprend l'étape suivante, exécutée pour les profondeurs D croissantes à partir de D=0 jusqu'à ce qu'une référence (G) soit retournée :

   - si un des $2^{K-D}$ emplacements de mémoire que comprend la table fantôme (117) pour ledit registre d'ordre i contient une référence associée à un motif inséré de (i+1)K-D bits dont les iK premiers bits forment la séquence associée audit registre d'ordre i et dont les K-D derniers bits correspondent aux K-D premiers des K bits désignant ladite cellule hantée de la mémoire TRIE au sein dudit registre d'ordre i, retourner ladite référence et la profondeur D.

7. Procédé selon l'une quelconque des revendications 3 à 6, dans lequel les opérations suivantes sont exécutées en réponse à une commande d'insertion d'un premier motif de L=MK+B bits associé à une première référence (S), M et B étant des entiers tels que M≥0 et 1≤B≤K :

   - sélectionner le registre portier d'ordre 0 ;
   - si M>0, procéder aux étapes /a/ à /e/ suivantes pour chacune des valeurs du rang i croissant de 0 à M-1 :

      /a/ lire des données dans une première cellule (MT[R,V]) de la table miroir (116) correspondant à la cellule (T[R,V]) de la mémoire TRIE (112) désignée par la (i+1)-ième tranche de K bits du premier motif au sein du registre d'ordre i sélectionné ;
      /b/ si les données lues dans la première cellule indiquent que la cellule correspondante (T[R,V]) de la mémoire TRIE contient un pointeur de poursuite d'analyse (Ptr(C)), sélectionner le registre de la mémoire TRIE désigné par ledit pointeur comme registre d'ordre i+1 ;
      /c/ si les données lues dans la première cellule indiquent que la cellule correspondante de la mémoire TRIE (T[R,V]) ne contient pas de pointeur de poursuite d'analyse, sélectionner un registre disponible de la mémoire TRIE comme registre d'ordre i+1, écrire dans ladite cellule correspondante de la mémoire TRIE un pointeur de poursuite d'analyse (R') désignant le registre d'ordre i+1 sélectionné, et écrire dans la première cellule de la table miroir l'indication (FP=1) que la cellule correspondante de la mémoire TRIE contient un pointeur de poursuite d'analyse ainsi que ledit pointeur ;
      /d/ si une seconde référence (F), associée à un second motif binaire, a précédemment été obtenue, écrire ladite seconde référence dans chaque cellule non hantée (T[R,Z]) de la mémoire TRIE, appartenant au registre de rang i sélectionné et ne contenant pas de pointeur, et écrire la longueur (Λ) dudit second motif binaire dans chaque cellule correspondante (MT[R,Z]) de la table miroir ;
      /e/ si les données lues dans la première cellule indiquent que la cellule correspondante de la mémoire TRIE (T[R,V]) est hantée (FH(C)=1), obtenir dans la table fantôme (117) une seconde référence (F) associée à un second motif binaire constitué par le motif inséré de (i+1)K-D bits et de profondeur D minimale dont les iK premiers bits forment la séquence associée au registre d'ordre i sélectionné, et dont les K-D derniers bits correspondent aux K-D premiers des K bits désignant ladite cellule hantée (T[R,V]) au sein du registre d'ordre i sélectionné ;

- procéder aux étapes /f/ à /j/ suivantes pour chaque tranche de K bits de la forme $2^{K-B}V_M+Z$, où $V_M$ est le nombre formé par les B derniers bits du premier motif et Z est un entier compris entre 0 et $2^{K-B}-1$ :

/f/ lire des données dans une seconde cellule (MT[R,W+Z]) de la table miroir correspondant à la cellule (T[R,W+Z]) de la mémoire TRIE (112) désignée par ladite tranche $2^{K-B}V_M+Z$ au sein du registre d'ordre M sélectionné ;

/g/ si les données lues dans la seconde cellule indiquent que la cellule correspondante (T[R,W+Z]) de la mémoire TRIE est hantée (FH(C)=1), obtenir dans la table fantôme (117) la longueur du motif inséré (G) de (M+1)K-D bits et de profondeur D minimale dont les MK premiers bits forment la séquence associée au registre d'ordre M sélectionné, et dont les K-D derniers bits correspondent aux K-D premiers des K bits désignant ladite cellule hantée au sein du registre d'ordre M sélectionné, et ne pas exécuter les étapes /h/ à /j/ si la profondeur obtenue (D) est inférieure à K-B ;

/h/ si les données lues dans la seconde cellule indiquent que la cellule correspondante (T[R,W+Z]) de la mémoire TRIE n'est pas hantée, écrire dans la seconde cellule de la table miroir l'indication (FH=1) que la cellule correspondante de la mémoire TRIE est hantée ;

/i/ si les données lues dans la seconde cellule indiquent que la cellule correspondante de la mémoire TRIE contient un pointeur de poursuite d'analyse (Ptr(C)), propager de façon récursive la première référence (S) associée au premier motif binaire à partir du registre désigné par ledit pointeur de poursuite d'analyse ;

/j/ si les données lues dans la seconde cellule indiquent que la cellule correspondante (T[R,W+Z]) de la mémoire TRIE ne contient pas de pointeur de poursuite d'analyse (FP(C)=0), écrire ladite première référence (S) dans ladite cellule correspondante de la mémoire TRIE, et écrire la longueur (L) dudit premier motif binaire dans la seconde cellule de la table miroir

- écrire dans la table fantôme la première référence (S), en relation avec la profondeur K-B, pour chaque cellule de la mémoire TRIE désignée par une tranche de K bits de la forme $2^{K-B}V_M+Z$, où Z est un entier compris entre 0 et $2^{K-B}-1$ ; et

- exécuter l'étape /d/ pour le rang i=M.

**8.** Procédé selon la revendication 7, dans lequel la propagation récursive d'une première référence (S') associée à un premier motif binaire à partir d'un registre donné de la mémoire TRIE (112) comprend les étapes suivantes pour chaque tranche de K bits :

- lire des données dans la cellule (MT[R,Z]) de la table miroir (116) correspondant à la cellule (T[R,Z]) de la mémoire TRIE désignée par ladite tranche de K bits au sein dudit registre ;

- si les données lues indiquent que la cellule de la mémoire TRIE désignée par ladite tranche de K bits au sein dudit registre n'est pas hantée (FH(C)=0), ne contient pas de pointeur de poursuite d'analyse (FP(C)=0) et ne contient pas une référence associée à un motif binaire plus long que le premier motif binaire ($\lambda(C) \leq L$), écrire de ladite première référence (S') dans la cellule de la mémoire TRIE désignée par ladite tranche de K bits au sein dudit registre, et écrire la longueur (L') dudit premier motif binaire dans la cellule correspondante de la table miroir ;

- si les données lues dans la troisième cellule indiquent que la cellule de la mémoire TRIE désignée par ladite tranche de K bits au sein dudit registre n'est pas hantée (FH(C)=0) et contient un pointeur de poursuite d'analyse (FP(C)=1), propager de façon récursive la première référence (S') associée au premier motif binaire à partir du registre désigné par ledit pointeur de poursuite d'analyse (Ptr(C)).

**9.** Procédé selon l'une quelconque des revendications 3 à 8, dans lequel, en réponse à une commande de suppression d'un premier motif de L=MK+B bits associé à une première référence (S), M et B étant des entiers tels que M≥0 et 1≤B≤K, on exécute, à partir du rang i=0 pour lequel on sélectionne le registre portier d'ordre 0, un processus récursif comportant des itérations imbriquées pour les rangs i≥0, chaque itération de rang i≥0 comprenant les opérations suivantes :

- si i<M, procéder aux étapes /a'/ à /h'/ suivantes :

/a'/ sélectionner pour le rang i une première cellule (MT[R,V]) de la table miroir (116) correspondant à la cellule (T[R, V]) de la mémoire TRIE (112) désignée par la (i+1)-ième tranche de K bits du premier motif au sein du registre d'ordre i sélectionné, et lire des données dans la première cellule sélectionnée pour le rang i ;

/b'/ si les données lues dans la première cellule sélectionnée pour le rang i indiquent que la cellule correspondante de la mémoire TRIE est hantée (FH(C)=1), obtenir dans la table fantôme (117) une seconde référence (F) associée à un second motif binaire constitué par le motif inséré de (i+1)K-D bits et de profondeur D minimale dont les iK premiers bits forment la séquence associée au registre d'ordre i sélectionné, et dont les K-D derniers bits correspondent aux K-D premiers des K bits désignant ladite cellule hantée (T[R,V]) au sein du registre d'ordre i sélectionné;

/c'/ sélectionner comme registre d'ordre i+1 un registre de la mémoire TRIE désigné par un pointeur de poursuite d'analyse (Ptr(C)) inclus dans les données lues

/d'/ exécuter l'itération de rang i+1 ;

/e'/ écrire dans la première cellule de la table miroir sélectionnée pour le rang i (MT[R,V]) l'indication (FP=0) que la cellule correspondante (T[R,V]) de la mémoire TRIE ne contient pas de pointeur de poursuite d'analyse ;

/f'/ si une seconde référence (F), associée à un second motif binaire, a précédemment été obtenue, écrire ladite seconde référence dans la cellule de la mémoire TRIE (T[R,V]) correspondant à la première cellule sélectionnée pour le rang i, et écrire la longueur (A) dudit second motif binaire dans la première cellule sélectionnée pour le rang i (MT[R,V]) ;

/g'/ si aucune seconde référence n'a précédemment été obtenue, écrire dans la première cellule sélectionnée pour le rang i l'indication que la cellule correspondante de la mémoire TRIE est vide ;

/h'/ si i>0 et chaque cellule (MT[R,Z]) du registre de la table miroir correspondant au registre d'ordre i sélectionné indique que la cellule correspondante (T[R,Z]) de la mémoire TRIE ne contient pas de pointeur de poursuite d'analyse (FP(C)=0) et n'est pas hantée (FH(C)=0), rendre disponible le registre d'ordre i sélectionné ;

- si i=M, effacer la référence (S) associée au premier motif binaire de la mémoire fantôme, pour la cellule de la mémoire TRIE désignée par la tranche de K bits $2^{K-B}V_M$ dans le registre d'ordre M sélectionné pour le rang M, où $V_M$ est le nombre formé par les B derniers bits du premier motif, et procéder aux étapes /i'/ à /l'/ suivantes pour chaque cellule (T[R,W+Z]) de la mémoire TRIE désignée par une tranche de K bits de la forme $2^{K-B}V_M+Z$, où Z est un entier compris entre 0 et $2^{K-B}-1$ :

/i'/ consulter la table fantôme (117) pour déterminer si elle contient, pour ladite cellule (T[R,W+Z]) désignée par la tranche $2^{K-B}V_M+Z$, au moins une référence (G) associée à un troisième motif binaire de profondeur au moins égale à K-B, et sélectionner le cas échéant le troisième motif binaire de profondeur (D) minimale ; ;

/j'/ si la table fantôme ne contient pas de référence (G) pour ladite cellule désignée par la tranche $2^{K-B}V_M+Z$, écrire l'indication (FH=0) que ladite cellule désignée par la tranche $2^{K-B}V_M+Z$ n'est pas hantée dans la cellule correspondante (MT[R,W+Z]) de la table miroir, et si une seconde référence (F), associée à un second motif binaire, a précédemment été obtenue, sélectionner ledit second motif binaire en tant que troisième motif binaire ;

/k'/ s'il a été sélectionné un troisième motif binaire et si ladite cellule (T[R,W+Z]) désignée par la tranche $2^{K-B}V_M+Z$ contient un pointeur de poursuite d'analyse d'après des données lues dans la cellule correspondante de la mémoire miroir (FP(C)=1), propager de façon récursive une troisième référence (F') associée au troisième motif binaire sélectionné à partir du registre désigné par ledit pointeur de poursuite d'analyse (Ptr(C)), en tenant compte de la longueur (L) du premier motif binaire ;

/l'/ s'il a été sélectionné un troisième motif binaire et si ladite cellule (T[R,W+Z]) désignée par la tranche $2^{K-B}V_M+Z$ ne contient pas de pointeur de poursuite d'analyse d'après les données lues dans la cellule correspondante de la mémoire miroir (FP(C)=0), écrire une troisième référence (F') associée au troisième motif binaire sélectionné dans la cellule de la mémoire TRIE désignée par ladite tranche $2^{K-B}V_M+Z$, et écrire la longueur (L') du troisième motif binaire sélectionné dans la cellule correspondante (MT[R,W+Z]) de la table miroir.

**10.** Procédé selon la revendication 9, dans lequel la propagation récursive d'une troisième référence (S') associée à un troisième motif binaire à partir d'un registre donné de la mémoire TRIE (112) en tenant compte de la longueur (L) du premier motif binaire comprend les étapes suivantes pour chaque tranche de K bits :

- lire des données dans la cellule (MT[R,Z]) de la table miroir (116) correspondant à la cellule (T[R,Z]) de la mémoire TRIE désignée par ladite tranche de K bits au sein dudit registre ;

- si les données lues indiquent que la cellule de la mémoire TRIE désignée par ladite tranche de K bits au sein dudit registre n'est pas hantée (FH(C)=0), ne contient pas de pointeur de poursuite d'analyse (FP(C)=0) et ne contient pas une référence associée à un motif binaire plus long que le premier motif binaire ($\lambda$(C)≤L), écrire de ladite troisième référence (S') dans la cellule de la mémoire TRIE désignée par ladite tranche de K bits au sein dudit registre, et écrire la longueur (L') dudit troisième motif binaire dans la cellule correspondante de la table miroir ;

- si les données lues indiquent que la cellule de la mémoire TRIE désignée par ladite tranche de K bits au sein dudit registre n'est pas hantée (FH(C)=0) et contient un pointeur de poursuite d'analyse (FP(C)=1), propager de façon récursive la troisième référence (S') associée au troisième motif binaire à partir du registre désigné par ledit pointeur de poursuite d'analyse (Ptr(C)) en tenant compte de la longueur (L) du premier motif binaire.

11. Procédé selon la revendication 9 ou 10, dans lequel, pour chaque rang i<M, si les données lues à l'étape /a/ indiquent que la cellule (T[R,V]) de la mémoire TRIE correspondant à la première cellule sélectionnée pour le rang i (MT[R,V]) ne contient pas de pointeur de poursuite d'analyse (FP(C)=0), on termine le processus récursif en indiquant une erreur.

12. Procédé selon la revendication 9, 10 ou 11, dans lequel, avant d'effacer la référence (S) associée au premier motif binaire de la mémoire fantôme (117) pour la cellule de la mémoire TRIE désignée par la tranche de K bits $2^{K-B}V_M$ dans le registre d'ordre M sélectionné pour le rang M, on lit ce que contient la table fantôme pour ladite cellule à la profondeur K-B, et si ce contenu ne correspond pas à une référence ou correspond à une référence distincte de celle associée au premier motif binaire, on termine le processus récursif en indiquant une erreur.

13. Routeur pour des réseaux de télécommunications à commutation de paquets, comprenant un circuit (111) d'analyse de l'en-tête de paquets reçus, à l'aide d'une mémoire associative de type TRIE (112), et des moyens (113-115) de mise à jour de la mémoire TRIE, opérant conformément à un procédé selon l'une quelconque des revendications précédentes.

14. Routeur selon la revendication 13, dans lequel les moyens de mise à jour comprennent une interface de gestion (113) recevant les commandes d'insertion et de suppression de motifs depuis le circuit d'analyse (111), un processeur (114) exécutant des procédures de mise à jour selon les commandes d'insertion et de suppression reçues par l'interface de gestion (113), et une mémoire auxiliaire (115) comprenant une table miroir (116) reflétant le contenu de la table TRIE (112), le processeur accédant à la mémoire auxiliaire dans le cadre des procédures de mise à jour, et retournant des commandes de mise à jour au circuit d'analyse (111) par l'intermédiaire de l'interface de gestion (113).

15. Routeur selon la revendication 14, dans lequel la mémoire auxiliaire (115) comprend en outre une table fantôme (117) mémorisant les références associées aux motifs binaires insérés, chaque référence étant mémorisée dans la table fantôme (117) à un emplacement correspondant à la cellule de la mémoire TRIE (112), où elle serait contenue si le motif binaire associé était le seul motif inséré dans la mémoire TRIE.

16. Routeur selon l'une quelconque des revendications 13 à 15, dans lequel les paquets analysée sont des cellules ATM (Asyncronous Transfer Mode).

**Patentansprüche**

1. Verfahren zur Aktualisierung eines TRIE-Assoziativspeichers (112), der in Form einer Gruppe von Registern von $2^K$ Zellen organisiert ist, die wenigstens ein Pförtnerregister umfasst, von dem aus Bitketten durch aufeinanderfolgende Abschnitte von K Bits analysiert werden, wobei K eine ganze Zahl von mindestens gleich 1 ist, jede nicht leere Zelle des TRIE-Speichers Daten enthält, die entweder einen Analysefortführungszeiger (Ptr) oder eine Referenz (Ref) umfasst, der TRIE-Speicher jedem Register eine ganzzahlige Ordnung i≥0 und eine jeweilige Folge von iK Bits zuordnet und die Analyse einer Bitkette, ausgehend vom Rang i=0, für den das Pförtnerregister der Ordnung 0 ausgewählt ist, wenigstens eine. Iteration vom Rang i umfasst, welche die folgenden Operationen umfasst:

- Lesen der Daten in einer Zelle des ausgewählten Registers der Ordnung i, wobei die Zelle durch den (i+1)-ten Abschnitt von K Bits der analysierten Kette bestimmt ist;
- wenn die gelesenen Daten einen Analysefortführungszeiger enthalten, Auswählen eines Registers der Ordnung i+1 des TRIE-Speichers, das durch den genannten Zeiger bestimmt ist, wobei die dem ausgewählten Register der Ordnung i+1 zugeordnete Folge aus (i+1)K ersten Bits der analysierten Kette gebildet ist, und dann Durchführen der Iteration vom Rang i+1;

- wenn die gelesenen Daten Analyseenddaten sind, die keinen Analysefortführungszeiger enthalten, Beenden der Analyse,

wobei eine in den genannten Analyseenddaten enthaltene Referenz ausgegeben wird,

**dadurch gekennzeichnet, dass** die Daten in den Zellen des TRIE-Speichers mittels einer Spiegeltabelle (116) in Reaktion auf Befehle zur Einfügung und zur Unterdrückung von binären Mustern variabler Länge, die jeweils einer Referenz zugeordnet sind, registriert werden, derart, dass bei der Analyse einer Bitkette die ausgegebene Referenz diejenige ist, die dem längsten der mit dem Anfang der analysierten Kette übereinstimmenden binären Muster zugeordnet ist,

dass die Spiegeltabelle (116) Register aus $2^K$ Zellen umfasst, von denen jedes einem jeweiligen, dem Pförtnerregister zugeordneten Register des TRIE-Speichers (112) entspricht, wobei jede der $2^K$ Zellen eines Registers der Spiegeltabelle einer jeweiligen Zelle des entsprechenden Registers des TRIE-Speichers entspricht, und dass jede Zelle des Spiegelspeichers, die einer nicht leeren Zelle des TRIE-Speichers entspricht, wenigstens enthält:

- eine Information (FP), die angibt, ob die entsprechende Zelle des TRIE-Speichers einen Analysefortführungszeiger enthält;
- wenn die entsprechende Zelle des TRIE-Speichers einen Analysefortführungszeiger enthält, den betreffenden Analysefortführungszeiger (Ptr);
- wenn die entsprechende Zelle des TRIE-Speichers keinen Analysefortführungszeiger, sondern eine Referenz (Ref) enthält, die Länge ($\lambda$) eines dieser Referenz zugeordneten binären Musters.

2.  Verfahren nach Anspruch 1, bei dem jede Zelle der Spiegeltabelle (116), die einer nicht leeren Zelle eines Registers der Ordnung i≥0 des TRIE-Speichers (112) entspricht, außerdem enthält:

- eine Information (FH), die angibt, ob die entsprechende Zelle des TRIE-Speichers geisterhaft ist, d.h., ob für wenigstens eine ganze Tiefe D, wobei 0≤D<K gilt, ein Muster aus (i+1)K-D Bits eingefügt worden ist, dessen iK erste Bits die dem genannten Register der Ordnung i zugeordnete Folge bilden und dessen K-D letzte Bits den K-D ersten der K Bits entsprechen, welche die entsprechende Zelle des TRIE-Speichers innerhalb des genannten Registers der Ordnung i bestimmen.

3.  Verfahren nach Anspruch 2, bei dem eine Phantomtabelle (117) benutzt wird, welche die den eingefügten binären Mustern zugeordneten Referenzen speichert, und bei dem die Phantomtabelle für jede geisterhafte Zelle eines Registers der Ordnung i≥0 des TRIE-Speichers (112) jede Referenz speichert, die einem eingefügten Muster von (i+1)K-D Bits zugeordnet ist, wobei 0≤D<K gilt, dessen iK erste Bits die dem genannten Register der Ordnung i zugeordnete Folge bilden und dessen K-D letzte Bits den K-D ersten der K Bits entsprechen, welche die genannte geisterhafte Zelle des TRIE-Speichers innerhalb des genannten Registers der Ordnung i bestimmen.

4.  Verfahren nach Anspruch 3, bei dem die Phantomtabelle (117) befragt wird, um bezüglich einer geisterhaften Zelle eines Registers der Ordnung i des TRIE-Speichers (112) die Referenz zu erhalten, die dem eingefügten Muster von (i+1)K-D Bits und minimaler Tiefe D zugeordnet ist, dessen iK erste Bits die dem genannten Register der Ordnung i zugeordnete Folge bilden und dessen K-D letzte Bits den K-D ersten der K Bits entsprechen, welche die genannte Zelle des TRIE-Speichers innerhalb des genannten Registers der Ordnung i bestimmen.

5.  Verfahren nach Anspruch 3 oder 4, bei dem die Phantomtabelle (117) für jedes wenigstens eine geisterhafte Zelle umfassende Register der Ordnung i des TRIE-Speichers (112) und für jede Tiefe D, wobei 0≤D<K gilt, $2^{K-D}$ Speicherstellen umfässt, die jeweils gegebenenfalls die Referenzen enthalten, die den eingefügten Mustern von (i+1) K-D Bits zugeordnet sind, deren iK erste Bits die Folge bilden, die dem Register der Ordnung i zugeordnet ist.

6.  Verfahren nach Anspruch 4 und 5, bei dem die Erlangung einer Referenz bezüglich einer geisterhaften Zelle eines Registers der Ordnung i des TRIE-Speichers (112) folgenden Schritt enthält, der für die anwachsenden Tiefen D ausgeführt wird, ausgehend von D=0, bis eine Referenz (G) rückgesendet wird:

- wenn eine der. $2^{K-D}$ Speicherstellen, die die Phäntomtabelle (117) für das genannte Register der Ordnung i umfasst, eine Referenz enthält, die einem eingefügten Muster von (i+1)K-D Bits zugeordnet ist, dessen iK erste Bits die dem genannten Register der Ordnung i zugeordnete Folge bilden und dessen K-D letzte Bits den K-D ersten der K Bits entsprechen, welche die genannte geisterhafte Zelle des TRIE-Speichers innerhalb des genannten Registers der Ordnung i bestimmen, Rücksenden der genannten Referenz und der Tiefe D.

**7.** Verfahren nach einem der Ansprüche 3 bis 6, bei dem die folgenden Operationen in Reaktion auf einen Befehl zur Einfügung eines ersten Musters von L=MK+B Bits ausgeführt werden, 1 das einer ersten Referenz (S) zugeordnet ist, wobei M und B ganze Zahlen sind, für die M≥0 und 1≤B≤K gilt:

- Auswählen des Pförtnerregisters der Ordnung 0;
- wenn M>0, Durchführen der folgenden Schritte /a/ bis /e/ für jeden der Werte vom Rang i, anwachsend von 0 bis M-1:

/a/ Lesen der Daten in einer ersten Zelle (MT[R,V]) der Spiegeltabelle (116), die der Zelle (T[R,V]) des TRIE-Speichers (112) entspricht, die durch den (i+1)-ten Abschnitt von K Bits des ersten Musters innerhalb des ausgewählten Registers der Ordnung i bestimmt ist;

/b/ wenn die in der ersten Zelle gelesenen Daten anzeigen, dass die entsprechende Zelle (T[R,V]) des TRIE-Speichers einen Analysefortführungszeiger (Ptr(C)) enthält, Auswählen des Registers des TRIE-Speichers, das durch diesen Zeiger als Register der Ordnung i+1 bestimmt ist;

/c/ wenn die in der ersten Zelle gelesenen Daten anzeigen, dass die entsprechende Zelle (T[R,V]) des TRIE-Speichers keinen Analysefortführungszeiger enthält, Auswählen eines verfügbaren Registers des TRIE-Speichers als Register der Ordnung i+1, Schreiben eines Analysefortführungszeigers (R'), der das ausgewählte Register der Ordnung i+1 bestimmt, in die entsprechende Zelle des TRIE-Speichers und Schreiben der Anzeige (FP=1), dass die entsprechende Zelle des TRIE-Speichers einen Analysefortführungszeiger sowie den genannten Zeiger enthält, in die erste Zelle der Spiegeltabelle;

/d/ wenn eine zweite Referenz (F), die einem zweiten binären Muster zugeordnet ist, vorher erhalten worden ist, Schreiben der zweiten Referenz in jede nicht geisterhafte Zelle (T[R,Z]) des TRIE-Speichers, die zum ausgewählten Register vom Rang i gehört und keinen Zeiger enthält, und Schreiben der Länge (A) des zweiten binären Musters in jede entsprechende Zelle (MT[R,Z]) der Spiegeltabelle;

/e/ wenn die in der ersten Zelle gelesenen Daten anzeigen, dass die entsprechende Zelle (T[R,V]) des TRIE-Speichers geisterhaft ist (FH(C)=1), in der Phantomtabelle (117) Erlangen einer zweiten Referenz (F), die einem zweiten binären Muster zugeordnet ist, das durch das eingefügte Muster von (i+1)K-D Bits und der minimalen Tiefe D gebildet ist, dessen iK erste Bits die dem ausgewählten Register der Ordnung i zugeordnete Folge bilden und dessen K-D letzte Bits den K-D ersten der K Bits entsprechen, welche die genannte geisterhafte Zelle (T[R,V]) innerhalb des ausgewählten Registers der Ordnung i bestimmen;

- Durchführen der folgenden Schritte /f/ bis /j/ für jeden Abschnitt von K Bits der Form $2^{K-B}V_M+Z$, wobei $V_M$ die durch die B letzten Bits des ersten Musters gebildete Zahl und Z eine ganze Zahl zwischen 0 und $2^{K-B}-1$ ist:

/f/ Lesen der Daten in einer zweiten Zelle (MT[R,W+Z]) der Spiegeltabelle, die der Zelle (T[R,W+Z]) des TRIE-Speichers (112) entspricht, die durch den genannten Abschnitt $2^{K-B}V_M+Z$ innerhalb des ausgewählten Registers der Ordnung M bestimmt ist;

/g/ wenn die in der zweiten Zelle gelesenen Daten anzeigen, dass die entsprechende Zelle (T{R,W+Z}) des TRIE-Speichers geisterhaft ist (FH(C)=1), in der Phantomtabelle (117) Gewinnen der Länge des eingefügten Musters (G) von (M+1)K-D Bits und der minimalen Tiefe D, dessen MK erste Bits die dem ausgewählten Register der Ordnung M zugeordnete Folge bilden und dessen K-D letzte Bits den K-D ersten der K Bits entsprechen, welche die genannte geisterhafte Zelle innerhalb des ausgewählten Registers der Ordnung M bestimmen, und kein Ausführen der Schritte /h/ bis /j/, wenn die erhaltene Tiefe (D) kleiner als K-B ist;

/h/ wenn die in der zweiten Zelle gelesenen Daten anzeigen, dass die entsprechende Zelle (T[R,W+Z]) des TRIE-Speichers nicht geisterhaft ist, Schreiben in die zweite Zelle der Spiegeltabelle (FH=1), dass die entsprechende Zelle des TRIE-Speichers geisterhaft ist;

/i/ wenn die in der zweiten Zelle gelesenen Daten anzeigen, dass die entsprechende Zelle des TRIE-Speichers einen Analysefortführungszeiger (Ptr(C)) enthält, Ausbreiten der dem ersten binären Muster zugeordneten, ersten Referenz (S) in rekursiver Weise, ausgehend vom Register, das durch den genannten Analysefortführungszeiger bestimmt ist;

/ j / wenn die in der zweiten Zelle gelesenen Daten anzeigen, dass die entsprechende Zelle (T[R,W+Z]) des TRIE-Speichers keinen Analysefortführungszeiger enthält (FP(C)=0), Schreiben der genannten ersten Referenz (S) in die genannte entsprechende Zelle des TRIE-Speichers und Schreiben der Länge (L) des genannten ersten binären Musters in die zweite Zelle der Spiegeltabelle;

- Schreiben der ersten Referenz (S) in die Phantomtabelle in Beziehung zur Tiefe K-B für jede Zelle des TRIE-Speichers, die durch einen Abschnitt von K Bits der Form $2^{K-B}V_M+Z$ bestimmt ist, wobei Z eine ganze Zahl zwischen 0 und $2^{K-B}-1$ ist; und

- Ausführen des Schrittes /d/ für den Rang i=M.

8. Verfahren nach Anspruch 7, bei dem die rekursive Ausbreitung einer ersten, einem ersten binären Muster zugeordneten Referenz (S'), ausgehend von einem gegebenen Register des TRIE-Speichers (112), die folgenden Schritte für jeden Abschnitt von K Bits umfasst:

- Lesen der Daten in der Zelle (MT[R,Z]) der Spiegeltabelle (116), die der Zelle (T[R,Z]) des TRIE-Speichers entspricht, die durch den genannten Abschnitt von K Bits innerhalb des genannten Registers bestimmt ist;
- wenn die gelesenen Daten anzeigen, dass die Zelle des TRIE-Speichers, die durch den genannten Abschnitt von K Bits innerhalb des genannten Registers bestimmt ist, nicht geisterhaft ist (FH(C)=0), keinen Analysefortführungszeiger enthält (FP(C)=0) und keine Referenz enthält, die einem binären Muster zugeordnet ist, das länger als das erste binäre Muster ist ($\lambda$(C)≤L), Schreiben der genannten ersten Referenz (S') in die Zelle des TRIE-Speichers, die durch den genannten Abschnitt von K Bits innerhalb des genannten Registers bestimmt ist, und Schreiben der Länge (L') des genannten ersten binären Musters in die entsprechende Zelle der Spiegeltabelle;
- wenn die in der dritten Zelle gelesenen Daten anzeigen, dass die Zelle des TRIE-Speichers, die durch den genannten Abschnitt von K Bits innerhalb des genannten Registers bestimmt ist, nicht geisterhaft ist (FH(C)=0) und einen Analysefortführungszeiger enthält (FP(C)=1), Ausbreiten der ersten Referenz (S'), die dem ersten binären Muster zugeordnet ist, in rekursiver Weise, ausgehend vom Register, das durch den genannten Analysefortführungszeiger (Ptr(C)) bestimmt ist.

9. Verfahren nach einem der Ansprüche 3 bis 8, bei dem in Reaktion auf einen Befehl zur Unterdrückung eines ersten Musters von L=MK+B Bits, das einer ersten Referenz (S) zugeordnet ist, wobei M und B ganze Zahlen sind und M≥0 und 1≤B≤K gilt, ausgehend vom Rang i=0, für den das Pförtnerregister der Ordnung 0 ausgewählt wird, ein rekursiver Prozess ausgeführt wird, der sich überlappende Iterationen für die Ränge i≥0 umfasst, wobei jede Iteration vom Rang i≥0 die folgenden Operationen umfasst:

- wenn i<M, Durchführen der folgenden Schritte /a'/ bis /h'/:

/a'/ Für den Rang i Auswählen einer ersten Zelle (MT[R,V]) der Spiegeltabelle (116), die der Zelle (T[R,V]) des TRIE-Speichers (112) entspricht, die durch den (i+1)-ten Abschnitt von K Bits des ersten Musters innerhalb des ausgewählten Registers der Ordnung i bestimmt ist, und Lesen der Daten in der ausgewählten ersten Zelle für den Rang i;
/b'/ wenn die in der für den Rang i ausgewählten, ersten Zelle gelesenen Daten anzeigen, dass die entsprechende Zelle des TRIE-Speichers geisterhaft ist (FH(C)=1), in der Phantomtabelle (117) Erhalten einer zweiten Referenz (F), die einem zweiten binären Muster zugeordnet ist, das durch das eingefügte Muster von (i+1)K-D Bits und der minimalen Tiefe D gebildet wird, dessen iK erste Bits die dem ausgewählten Register der Ordnung i zugeordnete Folge bilden und dessen K-D letzte Bits den K-D ersten der K Bits entsprechen, welche die genannte geisterhafte Zelle (T[R,V]) innerhalb des ausgewählten Registers der Ordnung i bestimmen;
/c'/ Auswählen eines Registers des TRIE-Speichers, das durch einen in den gelesenen Daten enthaltenen Analysefortführungszeiger (Ptr(C)) bestimmt ist, als Register der Ordnung i+1;
/d'/ Ausführen der Iteration vom Rang i+1;
/e'/ Schreiben in die für den Rang i ausgewählte, erste Zelle (MT[R,V]) der Spiegeltabelle die Anzeige (FP=0), dass die entsprechende Zelle (T[R,V]) des TRIE-Speichers keinen Analysefortführungszeiger enthält;
/f'/ wenn eine zweite, einem zweiten binären Muster zugeordnete Referenz (F) vorher erhalten worden ist, Schreiben der genannten zweiten Referenz in die Zelle des TRIE-Speichers (T [R, V]), die der ersten, für den Rang i ausgewählten. Zelle entspricht, und Schreiben der Länge ($\Lambda$) des genannten zweiten binären Musters in die für den Rang i ausgewählte, erste Zelle (MT[R,V]);
/g'/ wenn keine zweite Referenz vorher erhalten worden ist, Schreiben in die für den Rang i ausgewählte, erste Zelle die Anzeige, dass die entsprechende Zelle des TRIE-Speichers leer ist;
/h'/ wenn i>0 und jede Zelle (MT[R,Z]) des Registers der Spiegeltabelle, das dem ausgewählten Register der Ordnung i entspricht, anzeigt, dass die entsprechende Zelle (T[R,Z]) des TRIE-Speichers keinen Analysefortführungszeiger enthält (FP(C)=0) und nicht geisterhaft ist (FH(C)=0), Verfügbarmachen des ausgewählten Registers der Ordnung i;

- wenn i=M, Löschen der dem ersten binären Muster des Phantomspeichers zugeordneten Referenz (S) für die Zelle des TRIE-Speichers, die durch den Abschnitt von K Bits $2^{K-B}V_M$ im ausgewählten Register der Ordnung M für den Rang M bestimmt ist, wobei $V_M$ die durch die B letzten Bits des ersten Musters gebildete Zahl ist, und Durchführen der folgenden Schritte /i'/ bis /l'/ für jede Zelle (T[R,W+Z]) des TRIE-Speichers, die durch einen Abschnitt von K Bits der Form $2^{K-B}V_M+Z$ bestimmt ist, wobei Z eine ganze Zahl zwischen 0 und $2^{K-B}$-1 ist:

/i'/ Befragen der Phantomtabelle (117) zum Ermitteln, ob sie für die genannte Zelle (T[R,W+Z]), die durch den Abschnitt $2^{K-B}V_M+Z$ bestimmt ist, wenigstens eine Referenz (G) enthält, die einem dritten binären Muster von einer Tiefe von wenigstens gleich K-B zugeordnet ist, und Auswählen gegebenenfalls des dritten binären Musters von minimaler Tiefe (D);

/j'/ wenn die Phantomtabelle keine Referenz (G) für die genannte Zelle enthält, die durch den Abschnitt $2^{K-B}V_M+Z$ bestimmt ist, Schreiben der Anzeige (FH=0), dass die genannte Zelle, die durch den Abschnitt $2^{K-B}V_M+Z$ bestimmt ist, in der entsprechenden Zelle (MT[R,W+Z]) der Spiegeltabelle nicht geisterhaft ist, und wenn eine zweite Referenz (F), die einem zweiten binären Muster zugeordnet ist, vorher erhalten worden ist, Auswählen des genannten zweiten binären Musters als drittes binäres Muster;

/k'/ wenn ein drittes binäres Muster ausgewählt worden ist und wenn die genannte Zelle (T[R,W+Z]), die durch den Abschnitt $2^{K-B}V_M+Z$ bestimmt ist, einen Änalysefortführungszeiger gemäß den in der entsprechenden Zelle des Spiegelspeichers gelesenen Daten enthält (FP(C)=1), Ausbreiten einer dritten Referenz (F'), die dem ausgewählten dritten binären Motiv zugeordnet ist, in rekursiver Weise, ausgehend vom Register, das durch den genannten Analysefortführungszeiger (Ptr(C)) bestimmt ist, wobei die Länge (L) des ersten binären Musters berücksichtigt wird;

/1'/ wenn ein drittes binäres Muster ausgewählt worden ist und wenn die genannte Zelle (T[R,W+Z]), die durch den Abschnitt $2^{K-B}V_M+Z$ bestimmt ist, keinen Analysefortführungszeiger gemäß den in der entsprechenden Zelle des Spiegelspeichers gelesenen Daten enthält (FP(C)=0), Schreiben einer dritten Referenz (F'), die dem dritten ausgewählten binären Muster in der Zelle des TRIE-Speichers zugeordnet ist, die durch den genannten Abschnitt $2^{K-B}V_M+Z$ bestimmt ist, und Schreiben der Länge (L') des dritten ausgewählten binären Musters in die entsprechende Zelle (MT[R,W+Z]) der Spiegeltabelle.

10. Verfahren nach Anspruch 9, bei dem die rekursive Ausbreitung einer dritten, einem dritten binären Muster zugeordneten Referenz (S'), ausgehend von einem gegebenen Register des TRIE-Speichers (112), unter Berücksichtigung der Länge (L) des ersten binären Musters die folgenden Schritte für jeden Abschnitt von K Bits umfasst:

- Lesen der Daten in der Zelle (MT[R,Z]) der Spiegeltabelle (116), die der Zelle (T[R,Z]) des TRIE-Speichers entspricht, die durch den genannten Abschnitt von K Bits innerhalb des genannten Registers bestimmt ist;
- wenn die gelesenen Daten anzeigen, dass die Zelle des TRIE-Speichers, die durch den genannten Abschnitt von K Bits innerhalb des genannten Registers bestimmt ist, nicht geisterhaft ist (FH(C)=0), keinen Analysefortführungszeiger enthält (FP(C)=0) und keine Referenz enthält, die einem binären Muster zugeordnet ist, das länger als das erste binäre Muster ist ($\lambda$(C)≤L), Schreiben der genannten dritten Referenz (S') in die Zelle des TRIE-Speichers, die durch den genannten Abschnitt von K Bits innerhalb des genannten Registers bestimmt ist, und Schreiben der Länge (L') des genannten dritten binären Musters in die entsprechende Zelle der Spiegeltabelle;
- wenn die gelesenen Daten anzeigen, dass die Zelle des TRIE-Speichers, die durch den genannten Abschnitt von K Bits innerhalb des genannten Registers nicht geisterhaft ist (FH(C)=0) und einen Analysefortführungszeiger enthält (FP(C)=1), Ausbreiten der dritten, dem dritten binären Muster zugeordneten Referenz (S') in rekursiver Weise, ausgehend von dem durch den genannten Analysefortführungszeiger (Ptr(C)) bestimmten Register, unter Berücksichtigung der Länge (L) des ersten binären Musters.

11. Verfahren nach Anspruch 9 öder 10, bei dem für jeden Rang i<M, wenn die beim Schritt /a'/ gelesenen Daten anzeigen, dass die Zelle (T[R,V]) des TRIE-Speichers, die der ersten ausgewählten Zelle (MT[R,V]) für den Rang i entspricht, keinen Analysefortführungszeiger enthält (FP(C)=0), der rekursive Prozess beendet wird, wobei ein Fehler angezeigt wird.

12. Verfahren nach Anspruch 9, 10 oder 11, bei dem vor dem Löschen der Referenz (S), die dem ersten binären Muster des Phantomspeichers (117) zugeordnet ist, für die Zelle des TRIE-Speichers, die durch den Abschnitt von K Bits $2^{K-B}V_M$ im ausgewählten Register der Ordnung M für den Rang M bestimmt ist, das gelesen wird, was die Phantomtabelle für die genannte Zelle bei der Tiefe K-B enthält, und bei dem, wenn dieser Inhalt keiner Referenz entspricht oder einer Referenz entspricht, die verschieden zu derjenigen ist, die dem ersten binären Muster zugeordnet ist, der rekursive Prozess beendet wird, wobei ein Fehler angezeigt wird.

**13.** Router für Telekommunikationsnetze mit Vermittlung von Paketen, umfassend eine Schaltung (111) zur Analyse des Kopfes (Header) von empfangenen Paketen mittels eines TRIE-Assoziativspeichers (112) und Mittel (113-115) zur Aktualisierung des TRIE-Speichers, die entsprechend einem Verfahren gemäß einem der vorhergehenden Ansprüche arbeiten.

**14.** Router nach Anspruch 13, bei dem die Mittel zur Aktualisierung eine Steuerungsschnittstelle (113), welche die Befehle zur Einfügung und zur Unterdrückung von Mustern aus der Analyseschaltung (111) empfängt, einen Prozessor (114), der Aktualisierungsprozeduren entsprechend den durch die Steuerungsschnittstelle (113) empfangenen Befehlen zur Einfügung und zur Unterdrückung ausführt, und einen Zusatzspeicher (115) umfassen, der eine den Inhalt der TRIE-Tabelle (112) widerspiegelnde Spiegeltabelle (116) enthält, wobei der Prozessor auf den Zusatzspeicher im Rahmen der Aktualisierungsprozeduren zugreift und Aktualisierungsbefehle an die Analyseschaltung (111) über die Steuerungsschnittstelle (113) zurücksendet.

**15.** Router nach Anspruch 14, bei dem der Zusatzspeicher (115) außerdem eine Phantomtabelle (117) umfasst, welche die den eingefügten binären Mustern zugeordneten Referenzen speichert, wobei jede Referenz in der Phantomtabelle (117) an einer der Zelle des TRIE-Speichers (112) entsprechenden Stelle gespeichert wird, an der sie enthalten wäre, wenn das zugeordnete binäre Muster das einzige in den TRIE-Speicher eingefügte Muster war.

**16.** Router nach einem der Ansprüche 13 bis 15, bei dem die analysierten Pakete ATM (Asynchronous Transfer Mode) -Zellen sind.

**Claims**

**1.** A method of updating an associative memory of the TRIE type (112) organised in the form of a set of registers of $2^K$ cells having at least one portal register from which bit strings are analysed in successive slices of K bits, K being an integer at least equal to 1, each non-empty cell of the TRIE memory containing data incorporating either a continue analysis pointer (Ptr) or a reference (Ref), the TRIE memory associating an integer order i≥0 and a respective sequence of iK bits with each register, the analysis of a bit string consisting of at least one iteration of rank i, starting from the rank i=0 for which the portal register of order 0 is selected, whereby the iteration of rank i comprises the steps of:

- reading data in a cell of the register of order i selected, denoted by the (i+1)-th slice of K bits in the string analysed;
- if the data read contains a continue analysis pointer, selecting a register of order i+1 of the TRIE memory as indicated by said pointer, the sequence associated with the register of order i+1 selected being formed by the first (i+1)K bits of the string analysed, then running the iteration of rank i+1;
- if the data read represents end analysis data and contains no continue analysis pointer, terminating the analysis by issuing a reference contained in said end analysis data,

**characterised in that** the data are stored in the cells of the TRIE memory, with the aid of a mirror table, in response to commands to insert and delete binary patterns of variable length each associated with a reference, so that when a bit string is being analysed, the reference issued will be that associated with the longest of the binary patterns matching the start of the string analysed, **in that** the mirror table (116) comprises registers of $2^K$ cells, each corresponding to a respective register of the TRIE memory (112) allocated to the portal register, wherein each of the $2^K$ cells of a register in the mirror table corresponds to a respective cell in the corresponding register of the TRIE memory, and **in that** each cell in the mirror table corresponding to a non-empty cell of the TRIE memory contains at least:

- information (FP) indicating whether the corresponding cell of the TRIE memory contains a continue analysis pointer;
- if the corresponding cell of the TRIE memory contains a continue analysis pointer, the continue analysis pointer in question (Ptr);
- if the corresponding cell of the TRIE memory does not contain a continue analysis pointer but a reference (Ref), the length ($\lambda$) of a binary pattern associated with this reference.

**2.** A method as claimed in claim 1, wherein each cell of the mirror table (116) corresponding to a non-empty cell of a register of order i≥0 of the TRIE memory (112) further contains:

- information (FH) indicating whether the corresponding cell in the TRIE memory is ghosted, i.e. whether, for at least one integer depth D such that 0≤D<K, a pattern of (i+1)K-D bits has been inserted, the first iK bits of which form the sequence associated with said register of order i and the last K-D bits of which correspond to the first K-D of the K bits denoting said corresponding cell of the TRIE memory within said register of order i.

3. A method as claimed in claim 2, wherein a ghost table (117) is used which stores the references associated with the binary patterns inserted and wherein, for each ghosted cell of a register of order i≥0 of the TRIE memory (112), the ghost table stores each reference associated with an inserted pattern of (i+1)K-D bits, such that 0≤D<K, the first iK bits of which form the sequence associated with said register of order i and the last K-D bits of which correspond to the first K-D of the K bits denoting said ghosted cell of the TRIE memory within said register of order i.

4. A method as claimed in claim 3, comprising the step of looking up the ghost table (117) to obtain, relative to a ghosted cell of a register of order i of the TRIE memory (112), the reference associated with the inserted pattern of (i+1)K-D bits having a minimum depth D, the first iK bits of which form the sequence associated with said register of order i and the last K-D bits of which correspond to the first K-D bits of the K bits denoting said cell in the TRIE memory within said register of order i.

5. A method as claimed in claim 3 or 4, wherein the ghost table (117) has, for each register of order i of the TRIE memory (112) having at least one ghosted cell and for each depth D such that 0≤D<K, $2^{K-D}$ memory locations containing respectively, as applicable, the references associated with the inserted patterns of (i+1)K-D bits, the first iK bits of which form the sequence associated with said register of order i.

6. A method as claimed in claims 4 and 5, wherein obtaining a reference relating to a ghosted cell of a register or order i of the TRIE memory (112) incorporates the following step, run for the depths D increasing from D=0 until a reference (G) is returned:

   - if one of the $2^{K-D}$ memory locations contained in the ghost table (117) for said register of order i contains a reference associated with an inserted pattern of (i+1)K-D bits, the first iK bits of which form the sequence associated with said register of order i and the last K-D bits of which correspond to the first K-D bits of the K bits denoting said ghosted cell of the TRIE memory within said register of order i, returning said reference and the depth D.

7. A method as claimed in any one of claims 3 to 6, wherein the following operations are run in response to a command to insert a first pattern (V) of L=MK+B bits associated with a first reference (S), M and B being integers such that M≥0 and 1≤B≤K:

   - selecting the portal register of order 0;
   - if M>0, proceeding with the following steps /a/ to /e/ for each of the values of the rank i increasing from 0 to M-1:

      /a/ reading the data in a first cell (MT[R,V]) of the mirror table (116) corresponding to the cell (T[R,V]) of the TRIE memory (112) indicated by the (i+1)-th slice of K bits of the first pattern within the register of order i selected;
      /b/ if the data read in the first cell indicates that the corresponding cell (T[R,V]) of the TRIE memory contains a continue analysis pointer (Ptr(C)), selecting the register of the TRIE memory designated by said pointer as the register of order i+1;
      /c/ if the data read in the first cell indicates that the corresponding cell of the TRIE memory (T[R,V]) does not contain a continue analysis pointer, selecting a register available in the TRIE memory as a register of order i+1, writing in the corresponding cell of the TRIE memory a continue analysis pointer (R') designating the selected register of order i+1 and writing in the first cell of the mirror table an indication (FP=1) that the corresponding cell of the TRIE memory contains a continue analysis pointer as well as said pointer;
      /d/ if a second reference (F), associated with a second binary pattern, was previously obtained, writing said second reference in each non-ghosted cell (T[R,Z]) of the TRIE memory belonging to the register of order i selected and not containing a pointer and write the length (A) of said second binary pattern in each corresponding cell (MT[R,Z]) of the mirror table;
      /e/ if the data read in the first cell indicates that the corresponding cell of the TRIE memory (T[R,V]) is ghosted (FH(C)=1), obtaining from the ghost table (117) a second reference (F) associated with a second binary pattern constituted by the inserted pattern of (i+1)K-D bits having a minimum depth D, the first iK bits of which form the sequence associated with the register of order i selected and the last K-D bits of which correspond to the first K-D bits of the K bits denoting said ghosted cell (T[R,V]) within the register of order i selected;

- proceeding with the following steps /f/ to /j/ for each slice of K bits of the form $2^{K-B}V_M+Z$ where $V_M$ is the number formed by the last B bits of the first pattern and Z is an integer ranging between 0 and $2^{K-B}-1$:

/f/ reading data in a second cell (MT[R,W+Z]) of the mirror table corresponding to the cell (T[R,W+Z]) of the TRIE memory (112) denoted by said slice $2^{K-B}V_M+Z$ within the register of order M selected;

/g/ if the data read in the second cell indicates that the corresponding cell (T[R,W+Z]) of the TRIE memory is ghosted (FH(C)=1), obtaining from the ghost table (117) the length of the inserted pattern (G) of (M+1) K-D bits having a minimum depth D, the first MK bits of which form the sequence associated with the register of order M selected and the last K-D bits of which correspond to the first K-D bits of the K bits designating said ghosted cell within the register of order M selected and do not run steps /h/ to /j/ if the depth (D) obtained is less than K-B;

/h/ if the data read in the second cell indicates that the corresponding cell (T[R,W+Z]) of the TRIE memory is not ghosted, writing in the second cell of the mirror table an indication (FH=1) that the corresponding cell of the TRIE memory is ghosted;

/i/ if the data read in the second cell indicates that the corresponding cell of the TRIE memory contains a continue analysis pointer (Ptr(C)), recursively propagating the first reference (S) associated with the first binary pattern (V) starting from the register designated by said continue analysis pointer;

/j/ if the data read in the second cell indicates that the corresponding cell (T[R,W+Z]) of the TRIE memory does not contain a continue analysis pointer (FP(C)=0), writing said first reference (S) in said corresponding cell of the TRIE memory and write the length (L) of said first binary pattern in the second cell of the mirror table;

- writing in the ghost table the first reference (S), in relation with the depth K-B for each cell of the TRIE memory designated by a slice of K bits of the form $2^{K-B}V_M+Z$, where Z is an integer ranging between 0 and $2^{K-B}-1$; and
- running step /d/ for the rank i=M.

8. A method as claimed in claim 7, wherein the recursive propagation of a first reference (S') associated with a first binary pattern starting from a given register of the TRIE memory (112) includes the following steps for each slice of K bits:

- reading data in the cell (MT[R,Z]) of the mirror table (116) corresponding to the cell (T[R,Z]) of the TRIE memory designated by said slice of K bits within said register;
- if the data read indicates that the cell of the TRIE memory designated by said slice of K bits within said register is not ghosted (FH(C)=0), does not contain a continue analysis pointer (FP(C)=0) and does not contain a reference associated with a binary pattern longer than the first binary pattern ($\lambda(C)\leq L$), writing said first reference (S') in the cell of the TRIE memory designated by said slice of K bits within said register and writing the length (L') of said first binary pattern to the corresponding cell of the mirror table;
- if the data read in the third cell indicates that the cell of the TRIE memory designated by said slice of K bits within said register is not ghosted (FH(C)=0) and contains a continue analysis pointer (FP(C)=1), recursively propagating the first reference (S') associated with the first binary pattern starting from the register designated by said continue analysis pointer (Ptr(C)).

9. A method as claimed in any one of claims 3 to 8, wherein, in response to a command to delete a first pattern (V) of L=MK+B bits associated with a first reference (S), where M and B are integers such that $M\geq0$ and $1\leq B\leq K$, a recursive procedure is run, starting from rank i=0 for which the portal register of order 0 is selected, whereby said recursive procedure comprises nested iterations for the ranks $i\geq0$ and each iteration of rank $i\geq0$ comprises the operations of:

- if i<M, proceeding with the following steps /a'/ to /h'/:

/a'/ selecting for the rank i a first cell (MT[R,V]) of the mirror table (116) corresponding to the cell (T[R,V]) of the TRIE memory (112) denoted by the (i+1)-th slice of K bits of the first pattern within the register of order i selected and reading data in the first cell selected for rank i;

/b'/ if the data read in the first cell selected for rank i indicates that the corresponding cell of the TRIE memory is ghosted (FH(C)=1), obtaining from the ghost table (117) a second reference (F) associated with a second binary pattern constituted by the inserted pattern of (i+1)K-D bits having a minimum depth D, the first iK bits of which form the sequence associated with the register of order i selected and the last K-D bits of which correspond to the first K-D bits of the K bits denoting said ghosted cell (T[R,V]) within the register of order i selected;

/c'/ selecting as a register of order i+1 a register of the TRIE memory designated by a continue analysis pointer (Ptr(C)) included in the data read;

/d'/ performing the iteration of rank i+1;

/e'/ writing in the first cell of the mirror table selected for the rank i (MT[R,V]) an indication (FP=0) that the corresponding cell (T[R,V]) of the TRIE memory does not contain a continue analysis pointer;

/f/ if a second reference (F) associated with a second binary pattern was previously obtained, writing said second reference in the cell of the TRIE memory (T[R,V]) corresponding to the first cell selected for rank i and write the length (A) of said second binary pattern in the first cell selected for rank i (MT[R,V]);

/g'/ if no second reference was previously obtained, writing in the first cell selected for rank i an indication that the corresponding cell of the TRIE memory is empty;

/h'/ if i>0 and each cell (MT[R,Z]) of the register of the mirror table corresponding to the register of order i selected indicates that the corresponding cell (T[R,Z]) of the TRIE memory does not contain a continue analysis pointer (FP(C)=0) and is not ghosted (FH(C)=0), making the register of order i selected available;

- if i=M, deleting the reference (S) associated with the first binary pattern (V) of the ghost memory for the cell of the TRIE memory denoted by the slice of K bits $2^{K-B}V_M$ from the register of order M selected for the rank M where $V_M$ is the number formed by the last B bits of the first pattern and proceed with the following steps /i'/ to /l'/ for each cell (T[R,W+Z]) of the TRIE memory designated by a slice of K bits of the form $2^{K-B}V_M+Z$, where Z is an integer ranging between 0 and $2^{K-B}-1$:

/i'/ looking up the ghost table (117) to determine whether it contains, for said cell (T[R,W+Z]) denoted by the slice $2^{K-B}V_M+Z$, at least one reference (G) associated with a third binary pattern of a depth at least equal to K-B and, as applicable, selecting the third binary pattern of minimum depth (D);

/j'/ if the ghost table does not contain a reference (G) for said cell denoted by the slice $2^{K-B}V_M+Z$, writing in the corresponding cell (MT[R,W+Z]) of the mirror table an indication (FH=0) that said cell denoted by the slice $2^{K-B}V_M+Z$ is not ghosted and, if a second reference (F) associated with a second binary pattern was previously obtained, selecting said second binary pattern as the third binary pattern;

/k'/ if a third binary pattern has been selected and if said cell (T[R,W+Z]) designated by the slice $2^{K-B}V_M+Z$ contains a continue analysis pointer according to the data read in the corresponding cell of the mirror memory (FP(C)=1), recursively propagating a third reference (F') associated with the selected third binary pattern starting from the register designated by said continue analysis pointer (Ptr(C)), taking account of the length (L) of the first binary pattern (V);

/l'/ if a third binary pattern has been selected and if said cell (T[R,W+Z]) designated by the slice $2^{K-B}V_M+Z$ does not contain a continue analysis pointer according to the data read in the corresponding cell of the mirror memory (FP(C)=0), writing in the cell of the TRIE memory denoted by said slice $2^{K-B}V_M+Z$ a third reference (F') associated with the third binary pattern selected and writing the length (L') of the selected third binary pattern in the corresponding cell (MT[R,W+Z]) of the mirror table.

10. A method as claimed in claim 9, wherein the recursive propagation of a third reference (S') associated with a third binary pattern starting from a given register of the TRIE memory (112), taking account of the length (L) of the first binary pattern, comprises the following steps for each slice of K bits:

- reading the data in the cell (MT[R,Z]) of the mirror table (116) corresponding to the cell (T[R,Z]) of the TRIE memory designated by said slice of K bits within said register;

- if the data read indicates that the cell of the TRIE memory designated by said slice of K bits within said register is not ghosted (FH(C)=0), does not contain a continue analysis pointer (FP(C)=0) and does not contain a reference associated with a binary pattern longer than the first binary pattern ($\lambda(C) \leq L$), writing said third reference (S') in the cell of the TRIE memory designated by said slice of K bits within said register and writing the length (L') of said third binary pattern in the corresponding cell of the mirror table;

- if the data read indicates that the cell of the TRIE memory designated by said slice of K bits within said register is not ghosted (FH(C)=0) and contains a continue analysis pointer (FP(C)=1), recursively propagating the third reference (S') associated with the third binary pattern starting from the register designated by said continue analysis pointer (Ptr(C)), taking account of the length (L) of the first binary pattern.

11. A method as claimed in claim 9 or 10, wherein, for each rank i<M, if the data read in step /a'/ indicates that the cell (T[R,V]) of the TRIE memory corresponding to the first cell selected for rank i (MT[R,V]) does not contain a continue analysis pointer (FP(C)=0), the recursive process is terminated by indicating an error.

12. A method as claimed in claim 9, 10 or 11, wherein, before deleting the reference (S) associated with the first binary pattern (V) from the ghost memory (117) for the cell of the TRIE memory designated by the slice of K bits $2^{K-B}V_M$ from the register of order M selected for rank M, the contents of the ghost table in respect of said cell are read at depth K-B and if these contents do not correspond to a reference or correspond to a different reference from that associated with the first binary pattern, the recursive process is terminated by indicating an error.

13. A packet router for packet-switched telecommunications networks comprising circuitry (111) for analysing the header of packets received with the aid of an associative memory of the TRIE type (112) and means (113-115) for updating the TRIE memory, operating in accordance with a method as claimed in any one of the preceding claims.

14. A router as claimed in claim 13, wherein the updating means comprise a management interface (113) receiving commands from the analysis circuitry (111) to insert and delete patterns, a processor (114) running the update procedures in accordance with the insert and delete commands received by the management interface (113) and an auxiliary memory (115) having a mirror table (116) reflecting the contents of the TRIE table (112), the processor accessing the auxiliary memory as part of the update procedures, and returning update commands to the analysis circuitry (111) via the management interface (113).

15. A router as claimed in claim 14, wherein the auxiliary memory (115) further comprises a ghost table (117) storing the references associated with the binary patterns inserted, each reference being stored in the ghost table (117) at a location corresponding to the cell of the TRIE memory (112) where it would be contained if the associated binary pattern were the only pattern inserted in the TRIE memory.

16. A router as claimed in any one of claims 13 to 15, wherein the packets analysed are ATM (Asynchronous Transfer Mode) cells.

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | | | | | 1 | | 4 | 7 | | | | | | | | |
| 1 | | | | | | 2 | | | | | | | | | | |
| 2 | | | | | | | | | | | 3 | | | | | |
| 3 | | | | | S0 | | | | | | | S1 | | | | |
| 4 | | | | | | | | 5 | | | | | | | | |
| 5 | | | | | | | | | | | 6 | | | | | |
| 6 | | | | | | | | | | | | S2 | | | | |
| 7 | | | | | | | | | 8 | | | | | | | |
| 8 | | | | | | | | | 9 | | | | | | | |
| 9 | | | | | | | | | | | S3 | 10 | | | | |
| 10 | | | | | | | | | | | | | | S0 | | |
| ... | | | | | | | | | | | | | | | | |

*FIG. 1*

*FIG. 2*

$i \leftarrow 0$
$R \leftarrow R_0$ — 1

$R \leftarrow Ptr(C)$
$i \leftarrow i + 1$ — 4

$C \leftarrow T[R, V_i]$ — 2

oui FP(C) = 1 ? non — 3

retour Ref(C) — 5

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | | | | | 1 | | | | | | | | | | | |
| 1 | | | | | | | | | | | 2 | | | | | |
| 2 | P1 | P1 | P1 | P1 | | | | | | | | | | | | |
| 3 | | | | | | | | | | | | | | | | |
| 4 | | | | | | | | | | | | | | | | |
| ... | | | | | | | | | | | | | | | | |

*FIG. 3A*

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | | | | | 1 | | | | | | | | | | | |
| 1 | | | | | | | | | | | 2 | | | | | |
| 2 | P1 | P1 | P1 | P1 | | | | | | | | | | | | |
| $2_0$ | | | | | | | | | | | | | | | | |
| $2_1$ | | | | | | | | | | | | | | | | |
| $2_2$ | | P1 | | | | | | | | | | | | | | |
| $2_3$ | | | | | | | | | | | | | | | | |
| 3 | | | | | | | | | | | | | | | | |
| 4 | | | | | | | | | | | | | | | | |
| ... | | | | | | | | | | | | | | | | |

*FIG. 3B*

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 |   |   |   |   | 1 |   |   |   |   |   |   |   |   |   |   |   |
| 1 |   |   |   |   |   |   |   |   |   |   | 2 |   |   |   |   |   |
| 2 | P1 | P1 | P2 | P1 |   |   |   |   |   |   |   |   |   |   |   |   |
| 3 |   |   |   |   |   |   |   |   |   |   |   |   |   |   |   |   |
| 4 |   |   |   |   |   |   |   |   |   |   |   |   |   |   |   |   |
| ... |   |   |   |   |   |   |   |   |   |   |   |   |   |   |   |   |

*FIG. 4A*

|   | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 |   |   |   |   | 1 |   |   |   |   |   |   |   |   |   |   |   |
| 1 |   |   |   |   |   |   |   |   |   |   | 2 |   |   |   |   |   |
| 2 | P1 | P1 | P2 | P1 |   |   |   |   |   |   |   |   |   |   |   |   |
| $2_0$ |   |   | P2 |   |   |   |   |   |   |   |   |   |   |   |   |   |
| $2_1$ |   |   |   |   |   |   |   |   |   |   |   |   |   |   |   |   |
| $2_2$ |   | P1 |   |   |   |   |   |   |   |   |   |   |   |   |   |   |
| $2_3$ |   |   |   |   |   |   |   |   |   |   |   |   |   |   |   |   |
| 3 |   |   |   |   |   |   |   |   |   |   |   |   |   |   |   |   |
| 4 |   |   |   |   |   |   |   |   |   |   |   |   |   |   |   |   |
| ... |   |   |   |   |   |   |   |   |   |   |   |   |   |   |   |   |

*FIG. 4B*

EP 0 989 502 B1

*FIG. 5A*

*FIG. 5B*

*FIG. 6A*

*FIG. 7A*

| | 0 | 1 | 2 | 3 | 4 | 5 | 6 | 7 | 8 | 9 | A | B | C | D | E | F |
|---|---|---|---|---|---|---|---|---|---|---|---|---|---|---|---|---|
| 0 | | | | | 1 | | | | | | | | | | | |
| 1 | | | | | | | | | | | 2 | | | | | |
| 2 | P1 | P1 | 3 | P1 | | | 4 | | | | | | | | | |
| 2₀ | | | P2 | | | | | | | | | | | | | |
| 2₁ | | | | | | | | | | | | | | | | |
| 2₂ | | P1 | | | | | | | | | | | | | | |
| 2₃ | | | | | | | | | | | | | | | | |
| 3 | P2 | P2 | P2 | P2 | P2 | P2 | P2 | P2 | P3 | P3 | P3 | P3 | P2 | P2 | P2 | P2 |
| 3₀ | | | | | | | | | | | | | | | | |
| 3₁ | | | | | | | | | | | | | | | | |
| 3₂ | | | | | | | | | | P3 | | | | | | |
| 3₃ | | | | | | | | | | | | | | | | |
| 4 | | | | | | | | | P4 | | | | | | | |
| 4₀ | | | | | | | | | P4 | | | | | | | |
| 4₁ | | | | | | | | | | | | | | | | |
| 4₂ | | | | | | | | | | | | | | | | |
| 4₃ | | | | | | | | | | | | | | | | |
| 5 ... | | | | | | | | | | | | | | | | |

*FIG. 6B*

EP 0 989 502 B1

*FIG. 7B*

FIG. 8

FIG. 9

## FIG. 10A

$$F \leftarrow 0$$
$$i \leftarrow 0$$
$$M \leftarrow (L\text{-}1) \text{ div } K$$
$$R \leftarrow R_0$$

— 30

**oui** ← | $i < M$ ? | **non** → | Traitement dernière tranche (Fig.11) |

31

| $i \leftarrow i+1$ |
| $R \leftarrow R'$ |

44

| $V \leftarrow$ bits $iK$ à $(i+1)K\text{-}1$ du motif $\mathcal{U}$ |
| $C \leftarrow MT[R,V]$ |

32

**oui** ← | $FP(C) = 1$ ? | **non**

33

| Allouer $R'$ | —35

| $R' \leftarrow Ptr(C)$ | —34

| $FP(T[R,V]) \leftarrow 1$ |
| $Ptr(T[R,V]) \leftarrow R'$ |
| $FP(MT[R,V]) \leftarrow 1$ |
| $Ptr(MT[R,V]) \leftarrow R'$ |

—36

```
                              ↓
              oui    ┌─────────────────┐    non
         ┌──────────<│     F = 0 ?     │>──────────┐
         │           └─────────────────┘           │
         │                  37                      ↓
         │                               ┌─────────────────────┐
         │                               │      Z ← 0          │
         │                               └─────────────────────┘
         │                                          │
         │      ┌─────────────┐                     │          38
         │  ┌──>│   Z ← Z+1   │────────────────────>│        ╱
         │  │   └─────────────┘                     ↓      ╱
         │  │                              ┌─────────────────────┐
         │  │                              │    C' ← MT[R,Z]     │
         │  │                              └─────────────────────┘
         │  │                                         │
         │  │              oui    ┌──────────────────────────────────┐    non
         │  │         ┌──────────<│    FP(C') = FH(C') = 0 ?         │>──────┐
         │  │         │           └──────────────────────────────────┘      │
         │  │         ↓                          39                          │
         │  │   ┌─────────────────────┐                                      │
         │  │   │  λ(MT[R,Z]) ← Λ     │                                      │
         │  │   │  Ref(T[R,Z]) ← F    │─40                                   │
         │  │   └─────────────────────┘                                      │
         │  │         │                                                      │
         │  │         ↓←─────────────────────────────────────────────────────┘
         │  │    oui  ┌──────────────────┐    non
         │  └────────<│    Z < 2^K-1 ?   │>──────┐
         │            └──────────────────┘       │
         │                  41                    │
         │                       ↓←───────────────┘
         │              oui  ┌──────────┐ 42  non
         │             ┌────<│  i < M ? │>──────────┐
         │             ↓     └──────────┘           │
         │  oui  ┌──────────────────┐   non         │
         └──────<│   FH(C) = 0 ?    │>──────┐       │
                 └──────────────────┘       │       │
                        43                  ↓       │
                              ┌────────────────────┐│
                           45 │  Ghost(R, V, F, D) ││
                              └────────────────────┘│
                                       │            │
                                       ↓            │
                              ┌────────────────────┐│
                              │  Λ ← (i+1)K-D      ││
                              └────────────────────┘│
                                      46            ↓
                                                 ╭──────╮
                                                 │ FIN  │
                                                 ╰──────╯
```

*FIG. 10B*

$$B \leftarrow L\text{-}MK$$
$$V \leftarrow \text{bits } MK \text{ à } L\text{-}1 \text{ du motif } \mathscr{V}$$
$$W \leftarrow 2^{K\text{-}B}V$$
$$Z \leftarrow 0$$

— 50

$$Z \leftarrow Z+1$$

$$C \leftarrow MT[R, W+Z]$$ — 51

52

oui   $FH(C) = 1 ?$   non

54

$$Ghost(R, W+Z, \underline{G}, \underline{D})$$

$$FH(MT[R, W+Z]) \leftarrow 1$$

53

oui   $D < K\text{-}B ?$   non

55

57

oui   $FP(C) = 1 ?$   non

$$Forward\_status(Ptr(C), L, S, L)$$

$$\lambda(MT[R, W+Z]) \leftarrow L$$
$$Ref(T[R, W+Z]) \leftarrow S$$

58

59

oui   $Z < 2^{K\text{-}B}\text{-}1 ?$   non

56

60

$$GT[R, V, K\text{-}B] \leftarrow S$$

## FIG. 11

## FIG. 12A

*FIG. 12B*

*FIG. 13*

$$B \leftarrow L\text{-}MK$$
$$V \leftarrow \text{bits MK à L-1 du motif } \mathcal{V} \quad \text{—90}$$

$$S \leftarrow GT[R,V,K\text{-}B] \quad \text{—91}$$

oui — S = 0 ? — non

92

res ← "erreur"

93

retour

$$GT[R,V,K\text{-}B] \leftarrow 0 \quad \text{—94}$$

$$Z \leftarrow 0$$
$$W \leftarrow 2^{K\text{-}B}V \quad \text{—95}$$

$$Z \leftarrow Z+1 \quad \text{—99} \qquad Ghost(R, W+Z, \underline{G}, \underline{D}) \quad \text{—96}$$

oui — D < K-B ? — non

97

G = 0 ?

non

oui

100

$$L' \leftarrow \Lambda$$
$$F' \leftarrow F$$
$$FH(MT[R,W+Z]) \leftarrow 0$$

101

$$L' \leftarrow (M+1)K\text{-}D$$
$$F' \leftarrow G$$

102

$$C \leftarrow MT[R,W+Z] \quad \text{—103}$$

oui — FP(C) = 0 ? — non

104

$$\lambda(MT[R,W+Z]) \leftarrow L'$$
$$Ref(T[R,W+Z]) \leftarrow F'$$

105

Forward_status(Ptr(C), L, F', L')

106

oui — $Z < 2^{K\text{-}B}\text{-}1$ ? — non

98

*FIG. 14*